(19) **Europäisches Patentamt**
**European Patent Office**
**Office européen des brevets**

(11) **EP 4 287 681 A1**

(12) **EUROPEAN PATENT APPLICATION**
published in accordance with Art. 153(4) EPC

(43) Date of publication:
**06.12.2023 Bulletin 2023/49**

(21) Application number: **22774152.7**

(22) Date of filing: **18.03.2022**

(51) International Patent Classification (IPC):
**H04W 16/18** (2009.01)  **H04W 84/18** (2009.01)
**H04W 4/80** (2018.01)  **H04S 3/00** (2006.01)
**H04S 1/00** (2006.01)  **G06N 3/08** (2023.01)
**G06N 3/04** (2023.01)

(52) Cooperative Patent Classification (CPC):
**G06N 3/04; G06N 3/08; H04S 1/00; H04S 3/00;**
**H04W 4/80; H04W 16/18; H04W 84/18**

(86) International application number:
**PCT/CN2022/081761**

(87) International publication number:
**WO 2022/199491 (29.09.2022 Gazette 2022/39)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **22.03.2021 CN 202110303191**

(71) Applicant: **Huawei Technologies Co., Ltd.**
**Shenzhen, Guangdong 518129 (CN)**

(72) Inventors:
• **CHEN, Qihang**
**Shenzhen, Guangdong 518129 (CN)**
• **YANG, Peng**
**Shenzhen, Guangdong 518129 (CN)**

(74) Representative: **Thun, Clemens**
**Mitscherlich PartmbB**
**Patent- und Rechtsanwälte**
**Karlstraße 7**
**80333 München (DE)**

(54) **STEREO NETWORKING METHOD AND SYSTEM, AND RELATED APPARATUS**

(57)    This application discloses a stereo networking method and system, and a related apparatus. An electronic device may directly establish Wi-Fi direct connections to a plurality of audio devices. The electronic device may split audio data into audio frames of a plurality of audio channels, and distribute, through the Wi-Fi direct connections, the audio frames to the plurality of audio devices for playing, so that the plurality of audio devices can sound simultaneously. In this way, a forwarding action of a primary speaker can be canceled, and the electronic device directly distributes the audio frames of the plurality of audio channels to the plurality of audio devices for playing, to reduce an audio playback delay.

FIG. 8E

## Description

This application claims priority to Chinese Patent Application No. 202110303191.9, filed with the China National Intellectual Property Administration on March 22, 2021 and entitled "STEREO NETWORKING METHOD AND SYSTEM, AND RELATED APPARATUS", which is incorporated herein by reference in its entirety.

## TECHNICAL FIELD

This application relates to the field of communication technologies, and in particular, to a stereo networking method and system, and a related apparatus.

## BACKGROUND

As a wireless fidelity (wireless fidelity, Wi-Fi) technology is widely used, a Wi-Fi network access function is added to some electronic devices such as a smartphone, a speaker, and a television. At the same time, a Wi-Fi speaker is obtained by combining the Wi-Fi technology with a conventional speaker. The Wi-Fi speaker can play network audios by using AI voice/DLNA technologies.

Currently, a plurality of Wi-Fi speaker networks may form a wireless audio networking system by using a Wi-Fi router or a primary speaker. In this case, an intelligent terminal may control a plurality of Wi-Fi speakers by using the Wi-Fi router. Audio data, playback control operations, and playback synchronization of primary/secondary speakers all involve Wi-Fi router forwarding operations. However, the Wi-Fi router is a public Wi-Fi network and has a large quantity of access devices, and transmission performance of the Wi-Fi router or the Wi-Fi speaker is likely to be affected by other access devices. As a result, the Wi-Fi router or the Wi-Fi speaker fails to send data or a transmission delay is excessively long, causing frame freezing during audio playback on the Wi-Fi speaker.

## SUMMARY

This application provides a stereo networking method and system, and a related apparatus, so that a forwarding action of a primary speaker can be canceled, and an electronic device directly distributes audio frames of a plurality of audio channels to a plurality of audio devices for playing, to reduce an audio playback delay.

According to a first aspect, this application provides a stereo networking system, including an electronic device, a first audio device, and a second audio device. The electronic device is configured to receive first advertising information sent by the first audio device and second advertising information sent by the second audio device. The electronic device is further configured to: when determining, based on the first advertising information and the second advertising information, that the first audio device and the second audio device both support stereo networking and neither completes audio channel configuration, configure an audio channel of the first audio device as a first audio channel, and configure an audio channel of the second audio device as a second audio channel. The electronic device is configured to obtain an audio playback instruction. The electronic device is further configured to: obtain first audio data in response to the audio playback instruction, and split the first audio data into audio data of at least two audio channels. The audio data of the at least two audio channels includes audio data of the first audio channel and audio data of the second audio channel. The electronic device is further configured to: send the audio data of the first audio channel to the first audio device, and send the audio data of the second audio channel to the second audio device. The first audio device is configured to play the audio data of the first audio channel. The second audio device is configured to play the audio data of the second audio channel.

According to the stereo networking system provided in this application, the electronic device may split audio data into audio data of a plurality of audio channels, and distribute the audio data to a plurality of audio devices for playing, so that the plurality of audio devices can sound simultaneously. In this way, a forwarding action of a primary speaker can be canceled, and the electronic device directly distributes audio frames of a plurality of audio channels to the plurality of audio devices for playing, to reduce an audio playback delay.

In a possible implementation, when sending the audio data of the first audio channel to the first audio device, and sending the audio data of the second audio channel to the second audio device, the electronic device is specifically configured to: split the audio data of the first audio channel into audio frames of a specified time length, and split the audio data of the second audio channel into audio frames of the specified time length; determine playback timestamps of the audio frames of the first audio channel and playback timestamps of the audio frames of the second audio channel; and send the audio frames of the first audio channel and the playback timestamps of the audio frames of the first audio channel to the first audio device, and send the audio frames of the second audio channel and the playback timestamps of the audio frames of the second audio channel to the second audio device. When playing the audio data of the first audio channel, the first audio device is specifically configured to: play the audio frame of the first audio channel at a moment indicated by the playback timestamp of the audio frame of the first audio channel. When playing the audio data of the second audio channel, the second audio device is specifically configured to: play the audio frame of the second audio channel at a moment indicated by the playback timestamp of the audio frame of the second audio channel.

In this way, the electronic device may implement simultaneous sounding of the plurality of audio devices by using playback timestamps of audio frames of each audio channel.

In a possible implementation, the audio data of the at least two audio channels further includes audio data of a third audio channel. The electronic device is further configured to play the audio data of the third audio channel.

In this way, the electronic device and the audio device may further jointly sound, to implement a stereo group, and reduce costs for deploying the stereo group.

In a possible implementation, the electronic device is further configured to: split the audio data of the third audio channel into audio frames of the specified time length, and determine playback timestamps of the audio frames of the third audio channel. When playing the audio data of the third audio channel, the electronic device is specifically configured to: play the audio frame of the third audio channel at a moment indicated by the playback timestamp of the audio frame of the third audio channel.

In a possible implementation, the electronic device is further configured to: before obtaining the audio playback instruction, establish a first wireless fidelity Wi-Fi connection to the first audio device, and establish a second Wi-Fi connection to the second audio device.

In this way, the electronic device may distribute the audio frame to the audio device through a Wi-Fi connection, to reduce a transmission delay of the audio frame.

In a possible implementation, the electronic device is specifically configured to: receive the first advertising information sent by the first audio device by using Bluetooth low energy BLE, and receive the second advertising information sent by the second audio device by using the BLE. The electronic device is further configured to: establish a first BLE connection to the first audio device and establish a second BLE connection to the second audio device based on the first advertising information and the second advertising information; and send first Wi-Fi connection information to the first audio device through the first BLE connection, and send second Wi-Fi connection information to the second audio device through the second BLE connection. The first audio device is further configured to establish the first Wi-Fi connection to the electronic device based on the first Wi-Fi connection information. The second audio device is further configured to establish the second Wi-Fi connection to the electronic device based on the second Wi-Fi connection information.

In this way, the electronic device may discover an audio device by using the BLE, and establish a Wi-Fi connection to the audio device, without manually establishing a connection between the audio device and the electronic device.

In a possible implementation, the electronic device is specifically configured to: receive the first advertising information forwarded by the first audio device by using a routing device, and receive the second advertising information forwarded by the second audio device by using the routing device. The electronic device is further configured to: forward, based on the first advertising information and the second advertising information, first Wi-Fi connection information to the first audio device by using the routing device, and forward second Wi-Fi connection information to the second audio device by using the routing device. The first audio device is further configured to establish the first Wi-Fi connection to the electronic device based on the first Wi-Fi connection information. The second audio device is further configured to establish the second Wi-Fi connection to the electronic device based on the second Wi-Fi connection information.

In this way, the electronic device 100 may establish a Wi-Fi connection to the audio device without using a BLE technology.

In a possible implementation, the first audio device is specifically configured to: after receiving the first Wi-Fi connection information, disconnect a Wi-Fi connection to the routing device, and establish the first Wi-Fi connection to the electronic device. The second audio device is specifically configured to: after receiving the second Wi-Fi connection information, disconnect a Wi-Fi connection to the routing device, and establish the second Wi-Fi connection to the electronic device.

In a possible implementation, when configuring the audio channel of the first audio device as the first audio channel, and configuring the audio channel of the second audio device as the second audio channel, the electronic device is specifically configured to: send a first configuration instruction to the first audio device through a first Wi-Fi connection, and display a first configuration prompt, a first option corresponding to the first audio channel, and a second option corresponding to the second audio channel, where the first configuration prompt is used to prompt a user that an audio channel is currently being configured for the first audio device; after displaying the first configuration prompt, receive a first input of the user for the first option; determine the audio channel of the first audio device as the first audio channel in response to the first input; send a second configuration instruction to the second audio device through a second Wi-Fi connection, and display a second configuration prompt, the first option corresponding to the first audio channel, and the second option corresponding to the second audio channel, where the second configuration prompt is used to prompt the user that an audio channel is currently being configured for the second audio device; after displaying the second configuration prompt, receive a second input of the user for the second option; and determine the audio channel of the second audio device as the second audio channel in response to the second input. The first audio device is further configured to blink an indicator of the first audio device after receiving the first configuration instruction. The second audio device is further configured to blink an indicator of the second audio device after receiving the second configuration instruction.

In this way, when configuring an audio channel for a plurality of audio devices, the user can conveniently know a specific audio device, in the plurality of audio devices, for which the audio channel is being configured.

In a possible implementation, when configuring the audio channel of the first audio device as the first audio channel, and configuring the audio channel of the second audio device as the second audio channel, the electronic device is specifically configured to: display a third configuration prompt, where the third configuration prompt is used to prompt a user that a corresponding audio device is currently being configured for the first audio channel; when displaying the third configuration prompt, receive a first instruction sent by the first audio device through a first Wi-Fi connection based on a third input of the user; determine the audio channel of the first audio device as the first audio channel in response to the first instruction; after determining the audio channel of the first audio device as the first audio channel, display a fourth configuration prompt, where the fourth configuration prompt is used to prompt the user that a corresponding audio device is currently being configured for the second audio channel; when displaying the fourth configuration prompt, receive a second instruction sent by the second audio device through a second Wi-Fi connection based on a fourth input of the user; and determine the audio channel of the second audio device as the second audio channel in response to the second instruction.

In this way, it is convenient for the user to input a configured audio channel of an audio device on the audio device.

In a possible implementation, the electronic device is further configured to: when determining, based on the first advertising information and the second advertising information, that the first audio device and the second audio device both support stereo networking and complete audio channel configuration, receive first audio channel configuration information sent by the first audio device, and receive second audio channel configuration information sent by the second audio device. The first audio channel configuration information indicates that the audio channel of the first audio device is the first audio channel, and the second audio channel configuration information indicates that the audio channel of the second audio device is the second audio channel.

In this way, when the audio device has completed audio channel configuration before, the electronic device can quickly complete stereo networking with the audio device.

In a possible implementation, the electronic device is further configured to: before obtaining the multichannel audio data, perform clock synchronization with the first audio device and the second audio device.

In this way, it can be ensured that playback time of the electronic device and playback time of the audio device are synchronized.

In a possible implementation, when determining the playback timestamps of the audio frames of the first audio channel and the playback timestamps of the audio frames of the second audio channel, the electronic device is specifically configured to: determine a transmission delay of the audio frame, audio playback duration, and an estimated sending moment of a first audio frame of each audio channel after playing starts; determine a playback timestamp of the first audio frame of each audio channel based on the transmission delay of the audio frame, the audio playback duration, and the estimated sending moment of the first audio frame of each audio channel after the playing starts; and determine a playback timestamp of each audio frame of each audio channel based on the playback timestamp of the first audio frame of each audio channel and the specified time length of the audio frame.

In this way, when the playback timestamp of the audio frame is determined, audio frame playback of all audio devices may be synchronized in consideration of the transmission delay of the audio frame and the audio playback duration.

In a possible implementation, the electronic device is further configured to: obtain a playback pause instruction after sending the audio frames of the first audio channel and the playback timestamps of the audio frames of the first audio channel to the first audio device and sending the audio frames of the second audio channel and the playback timestamps of the audio frames of the second audio channel to the second audio device; and in response to the playback pause instruction, pause playing an audio frame and/or a video picture, send a first playback pause instruction to the first audio device, and send a second playback pause instruction to the second audio device. The first audio device is further configured to: after receiving the first playback pause instruction, pause playing the audio frame of the first audio channel, and delete a buffered audio frame of the first audio channel. The second audio device is further configured to: after receiving the second playback pause instruction, pause playing the audio frame of the second audio channel, and delete a buffered audio frame of the second audio channel.

In this way, when the electronic device stops playing the audio or video picture, even if the audio device stops playing the audio frame, it is ensured that the audio or video picture on the electronic device is synchronized with the audio played on the audio device.

In this embodiment of this application, the first advertising information includes first networking capability information and first networking status information, and the second advertising information includes second networking capability information and second networking status information. The first networking capability information indicates whether the first audio device supports stereo networking, the first networking status information indicates whether the first audio device completes audio channel configuration, the second networking capability information indicates whether the second audio device supports stereo networking configuration, and the second networking status information indicates whether the second audio device completes audio channel configuration.

In this way, the electronic device may determine, based on advertising information of an audio device, whether the audio device supports stereo networking and whether the audio device completes audio channel configuration.

In this embodiment of this application, the first Wi-Fi connection information includes a service set identifier SSID, a Wi-Fi password, and a Wi-Fi access frequency band of the first Wi-Fi connection, and the second Wi-Fi connection information includes an SSID, a Wi-Fi password, and a Wi-Fi access frequency band of the second Wi-Fi connection.

According to a second aspect, an embodiment of this application provides a stereo networking method, applied to an electronic device. The method includes: The electronic device receives first advertising information sent by a first audio device and second advertising information sent by a second audio device. When the electronic device determines, based on the first advertising information and the second advertising information, that the first audio device and the second audio device both support stereo networking and neither completes audio channel configuration, the electronic device configures an audio channel of the first audio device as a first audio channel, and configures an audio channel of the second audio device as a second audio channel. The electronic device obtains an audio playback instruction. The electronic device obtains first audio data in response to the audio playback instruction, and splits the first audio data into audio data of at least two audio channels. The audio data of the at least two audio channels includes audio data of the first audio channel and audio data of the second audio channel. The electronic device sends the audio data of the first audio channel to the first audio device for playing, and sends the audio data of the second audio channel to the second audio device for playing.

In a possible implementation, that the electronic device sends the audio data of the first audio channel to the first audio device for playing, and sends the audio data of the second audio channel to the second audio device for playing specifically includes: The electronic device splits the audio data of the first audio channel into audio frames of a specified time length, and splits the audio data of the second audio channel into audio frames of the specified time length. The electronic device determines playback timestamps of the audio frames of the first audio channel and playback timestamps of audio frames of the second audio channel. The electronic device sends the audio frames of the first audio channel and the playback timestamps of the audio frames of the first audio channel to the first audio device, and sends the audio frames of the second audio channel and the playback timestamps of the audio frames of the second audio channel to the second audio device. The playback timestamp of the audio frame of the first audio channel indicates a moment at which the audio frame of the first audio channel is played on the first audio device, and the playback timestamp of the audio frame of the second audio channel indicates a moment at which the audio frame of the second audio channel is played on the second audio device.

In a possible implementation, the audio data of the at least two audio channels further includes audio data of a third audio channel. The method further includes: The electronic device plays the audio data of the third audio channel.

In a possible implementation, the method further includes: The electronic device splits the audio data of the third audio channel into audio frames of the specified time length, and determines playback timestamps of the audio frames of the third audio channel. That the electronic device plays the audio data of the third audio channel specifically includes: The electronic device plays the audio frame of the third audio channel at a moment indicated by the playback timestamp of the audio frame of the third audio channel.

In a possible implementation, before the electronic device obtains the audio playback instruction, the method further includes: The electronic device establishes a first wireless fidelity Wi-Fi connection to the first audio device, and establishes a second Wi-Fi connection to the second audio device.

In a possible implementation, that the electronic device receives first advertising information sent by a first audio device and second advertising information sent by a second audio device specifically includes: The electronic device receives the first advertising information sent by the first audio device by using BLE, and receives the second advertising information sent by the second audio device by using the BLE. The method further includes: The electronic device establishes a first BLE connection to the first audio device and establishes a second BLE connection to the second audio device based on the first advertising information and the second advertising information. The electronic device sends first Wi-Fi connection information to the first audio device through the first BLE connection, and sends second Wi-Fi connection information to the second audio device through the second BLE connection. The first Wi-Fi connection information indicates the first audio device to establish the first Wi-Fi connection to the electronic device, and the second Wi-Fi connection information indicates the second audio device to establish the second Wi-Fi connection to the electronic device.

In a possible implementation, that the electronic device receives first advertising information sent by a first audio device and second advertising information sent by a second audio device specifically includes: The electronic device receives the first advertising information forwarded by the first audio device by using a routing device, and receives the second advertising information forwarded by the second audio device by using the routing device. The electronic device forwards, based on the first advertising information and the second advertising information, first Wi-Fi connection information to the first audio device by using the routing device, and forwards the second Wi-Fi connection information to the second audio device by using the routing device. The first Wi-Fi connection information indicates the first audio device to establish the first Wi-Fi connection to the electronic device, and the second Wi-Fi connection information indicates the second audio device to establish the second Wi-Fi connection to the electronic device.

In a possible implementation, the first Wi-Fi connection information specifically indicates the first audio device to establish the first Wi-Fi connection to the electronic device after disconnecting a Wi-Fi connection to the routing device. The second Wi-Fi connection information specifically indicates the second audio device to establish the second Wi-Fi connection to the electronic device after disconnecting a Wi-Fi connection to the routing device.

In a possible implementation, that the electronic device configures an audio channel of the first audio device as a first audio channel, and configures an audio channel of the second audio device as a second audio channel specifically includes: The electronic device sends a first configuration instruction to the first audio device through a first Wi-Fi connection, and displays a first configuration prompt, a first option corresponding to the first audio channel, and a second option corresponding to the second audio channel. The first configuration prompt is used to prompt a user that an audio channel is currently being configured for the first audio device, and the first configuration instruction instructs the first audio device to blink an indicator of the first audio device. After displaying the first configuration prompt, the electronic device receives a first input of the user for the first option. The electronic device determines the audio channel of the first audio device as the first audio channel in response to the first input. The electronic device sends a second configuration instruction to the second audio device through a second Wi-Fi connection, and displays a second configuration prompt, the first option corresponding to the first audio channel, and the second option corresponding to the second audio channel. The second configuration prompt is used to prompt the user that an audio channel is currently being configured for the second audio device, and the second configuration instruction instructs the second audio device to blink an indicator of the second audio device. After displaying the second configuration prompt, the electronic device receives a second input of the user for the second option. The electronic device determines the audio channel of the second audio device as the second audio channel in response to the second input.

In a possible implementation, that the electronic device configures an audio channel of the first audio device as a first audio channel, and configures an audio channel of the second audio device as a second audio channel specifically includes: The electronic device displays a third configuration prompt. The third configuration prompt is used to prompt a user that a corresponding audio device is currently being configured for the first audio channel. When displaying the third configuration prompt, the electronic device receives a first instruction sent by the first audio device through a first Wi-Fi connection based on a third input of the user. The electronic device determines the audio channel of the first audio device as the first audio channel in response to the first instruction. After determining the audio channel of the first audio device as the first audio channel, the electronic device displays a fourth configuration prompt. The fourth configuration prompt is used to prompt the user that a corresponding audio device is currently being configured for the second audio channel. When displaying the fourth configuration prompt, the electronic device receives a second instruction sent by the second audio device through a second Wi-Fi connection based on a fourth input of the user. The electronic device determines the audio channel of the second audio device as the second audio channel in response to the second instruction.

In a possible implementation, the method further includes: When determining, based on the first advertising information and the second advertising information, that the first audio device and the second audio device both support stereo networking and complete audio channel configuration, the electronic device receives first audio channel configuration information sent by the first audio device, and receives second audio channel configuration information sent by the second audio device. The first audio channel configuration information indicates that the audio channel of the first audio device is the first audio channel, and the second audio channel configuration information indicates that the audio channel of the second audio device is the second audio channel.

In a possible implementation, the method further includes: Before obtaining multichannel audio data, the electronic device performs clock synchronization with the first audio device and the second audio device.

In a possible implementation, that the electronic device determines playback timestamps of the audio frames of the first audio channel and playback timestamps of the audio frames of the second audio channel specifically includes: The electronic device determines a transmission delay of the audio frame, audio playback duration, and an estimated sending moment of a first audio frame of each audio channel after playing starts. The electronic device determines a playback timestamp of the first audio frame of each audio channel based on the transmission delay of the audio frame, the audio playback duration, and the estimated sending moment of the first audio frame of each audio channel after the playing starts. The electronic device determines a playback timestamp of each audio frame of each audio channel based on the playback timestamp of the first audio frame of each audio channel and the specified time length of the audio frame.

In a possible implementation, after the electronic device sends the audio frames of the first audio channel and the playback timestamps of the audio frames of the first audio channel to the first audio device, and sends the audio frames of the second audio channel and the playback timestamps of the audio frames of the second audio channel to the second audio device, the method further includes: The electronic device obtains a playback pause instruction. In response to the playback pause instruction, the electronic device pauses playing an audio frame and/or a video picture, sends a first playback pause instruction to the first audio device, and sends a second playback pause instruction to the second audio device. The first playback pause instruction instructs the first audio device to pause playing the audio frame of the first audio channel and delete a buffered audio frame of the first audio channel, and the second playback pause instruction instructs the second audio device to pause playing the audio frame of the second audio channel and delete a buffered audio frame of the second audio channel.

In this embodiment of this application, the first advertising information includes first networking capability information and first networking status information, and the second advertising information includes second networking capability information and second networking status information. The first networking capability information indicates whether the first audio device supports stereo networking, the first networking status information indicates whether the first audio device completes audio channel configuration, the second networking capability information indicates whether the second audio device supports stereo networking configuration, and the second networking status information indicates whether the second audio device completes audio channel configuration.

In this embodiment of this application, the first Wi-Fi connection information includes a service set identifier SSID, a Wi-Fi password, and a Wi-Fi access frequency band of the first Wi-Fi connection, and the second Wi-Fi connection information includes an SSID, a Wi-Fi password, and a Wi-Fi access frequency band of the second Wi-Fi connection.

According to a third aspect, this application provides an electronic device, including one or more processors, a Wi-Fi module, and one or more memories. The one or more memories and the Wi-Fi module are coupled to the one or more processors, the one or more memories are configured to store computer program code, the computer program code includes computer instructions, and when the one or more processors execute the computer instructions, the electronic device is enabled to perform the stereo networking method in any possible implementation of any one of the foregoing aspects.

According to a fourth aspect, an embodiment of this application provides a computer storage medium, including computer instructions. When the computer instructions run on an electronic device, the electronic device is enabled to perform the stereo networking method in any possible implementation of any one of the foregoing aspects.

According to a fifth aspect, an embodiment of this application provides a computer program product. When the computer program product runs on an electronic device, the electronic device is enabled to perform the stereo networking method in any possible implementation of any one of the foregoing aspects.

According to a sixth aspect, this application provides an audio device, including one or more processors, a Wi-Fi module, and one or more memories. The one or more memories and the Wi-Fi module are coupled to the one or more processors, the one or more memories are configured to store computer program code, the computer program code includes computer instructions, and when the one or more processors execute the computer instructions, the audio device is enabled to perform the method steps performed by the audio device in any possible implementation of any one of the foregoing aspects.

According to a seventh aspect, an embodiment of this application provides a computer storage medium, including computer instructions. When the computer instructions run on an audio device, an electronic device is enabled to perform the method steps performed by the audio device in any possible implementation of any one of the foregoing aspects.

According to an eighth aspect, an embodiment of this application provides a computer program product. When the computer program product runs on an audio device, the audio device is enabled to perform the method steps performed by the audio device in any possible implementation of any one of the foregoing aspects.

For beneficial effects of the second aspect to the eighth aspect, refer to the beneficial effects of the first aspect. Details are not described again.

**BRIEF DESCRIPTION OF DRAWINGS**

FIG. 1 is a schematic diagram of a network of a stereo networking manner according to an embodiment of this application;
FIG. 2 is a schematic diagram of an architecture of a stereo networking system according to an embodiment of this application;
FIG. 3 is a schematic diagram of a structure of an electronic device according to an embodiment of this application;
FIG. 4 is a schematic diagram of a software structure of an electronic device according to an embodiment of this application;
FIG. 5 is a schematic diagram of a hardware structure of an audio device according to an embodiment of this application;

FIG. 6 is a schematic diagram of a hardware structure of a routing device according to an embodiment of this application;

FIG. 7A and FIG. 7B are a schematic flowchart of a stereo networking method according to an embodiment of this application;

FIG. 8A to FIG. 8M are a schematic diagram of a group of interfaces according to an embodiment of this application;

FIG. 9 is a schematic flowchart of clock synchronization according to an embodiment of this application; and

FIG. 10A to FIG. 10G are a schematic diagram of distribution of a group of audio frames according to an embodiment of this application.

## DESCRIPTION OF EMBODIMENTS

The following clearly describes technical solutions in embodiments of this application in detail with reference to the accompanying drawings. In the descriptions of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

The following describes an implementation of stereo networking according to an embodiment of this application.

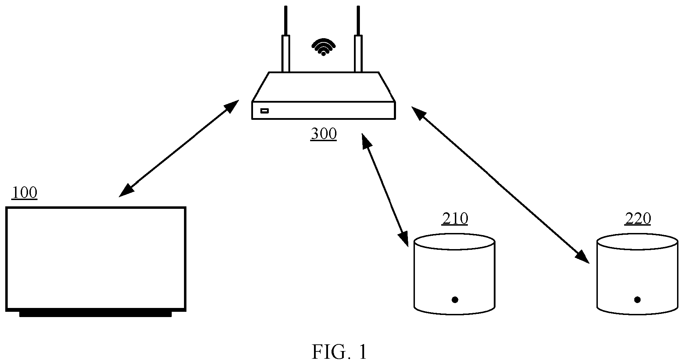

FIG. 1 is a schematic diagram of a network of a stereo networking manner according to an embodiment of this application.

As shown in FIG. 1, the network includes an electronic device 100, a plurality of audio devices, and a routing device 300. The plurality of audio devices include an audio device 210 and an audio device 220. The plurality of audio devices include one primary speaker and one or more secondary speakers. For example, the audio device 210 may be a primary speaker, and the audio device 220 may be a secondary speaker.

The routing device 300 may establish a Wi-Fi network. The electronic device 100 and the plurality of audio devices may establish Wi-Fi connections to the routing device 300, and access the Wi-Fi network.

The audio device 210 may access a server on an internet (internet) by using the routing device 300, and obtain audio data from the server. Alternatively, the audio device 210 may obtain audio data from the electronic device 100 by using the routing device 300.

After obtaining the audio data, the audio device 210 performs clock synchronization with another secondary speaker (for example, the audio device 220). After clock synchronization, the audio device 210 splits the audio data into audio frames of a plurality of audio channels, locally plays audio frames of one audio channel, and distributes, by using the routing device 300, audio frames of another audio channel to another secondary speaker (for example, the audio device 220) for playing.

The electronic device 100 may send a control instruction to the primary speaker (for example, the audio device 210) by using the routing device 300, to instruct the primary speaker to complete a playback control operation (for example, play, pause, switch to previous, switch to next, turn up the volume, or turn down the volume).

It can be learned from the foregoing implementation of stereo networking that, distribution of audio data between the primary speaker and the secondary speaker, playback synchronization between the primary speaker and the secondary speaker, and playback control operations performed by the electronic device 100 on the plurality of audio devices all require forwarding operations of the routing device 300. However, because there are a large quantity of product models of the routing device 300, and a Wi-Fi compatibility problem is prominent, a problem that the electronic device 100 or the audio device cannot be connected to the router 300 is prone to occur in the foregoing speaker networking manner, and forwarding performance of the routing device 300 is poor. As a result, an audio playback delay greatly increases. In addition, because the Wi-Fi network established by the routing device 300 may be accessed by another device, when a large quantity of devices are connected to the routing device 300, data sent by the routing device 300 to the plurality of audio devices may fail or a delay is excessively long. As a result, frame freezing, popping, or the like occurs when the audio device plays audio.

Therefore, an embodiment of this application provides a stereo networking method. An electronic device may directly establish Wi-Fi direct connections to a plurality of audio devices. The electronic device may split audio data into audio frames of a plurality of audio channels, and distribute, through the Wi-Fi direct connections, the audio frames to the plurality of audio devices for playing, so that the plurality of audio devices can sound simultaneously. In this way, a forwarding action of a primary speaker can be canceled, and the electronic device directly distributes the audio frames of the plurality of audio channels to the plurality of audio devices for playing, to reduce an audio playback delay.

The following describes a schematic diagram of an architecture of a stereo networking system according to an embodiment of this application.

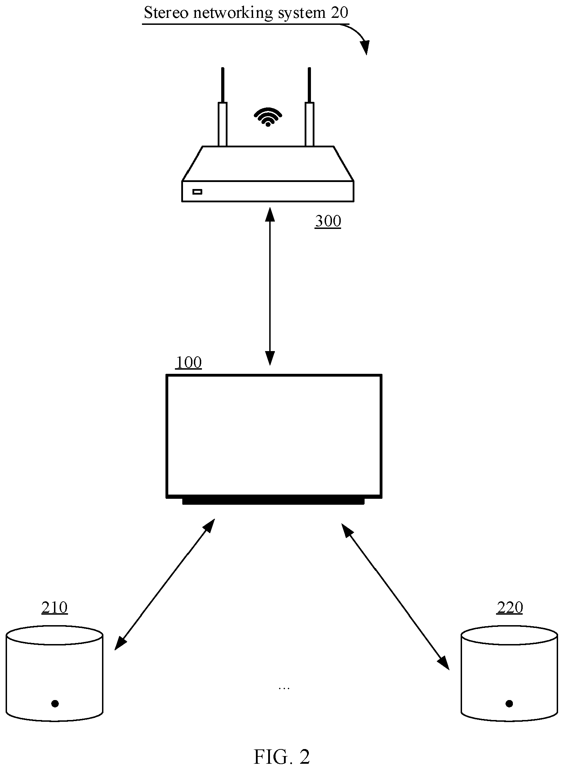

FIG. 2 is a schematic diagram of an architecture of a stereo networking system according to an embodiment of this application.

As shown in FIG. 2, the stereo networking system 20 may include the electronic device 100 and one or more audio devices. When there are a plurality of audio devices, the plurality of audio devices may include at least the audio device 210 and the audio device 220. Optionally, the speaker networking system may further include the routing device 300.

The electronic device 100 may establish connections to the plurality of audio devices through Wi-Fi direct connections. Alternatively, the electronic device 100 may establish connections to the plurality of audio devices by using classic Bluetooth or Bluetooth low energy (Bluetooth low energy, BLE). Optionally, the electronic device 100 may establish a Wi-Fi connection to the routing device 300, and access an internet (internet) by using the routing device 300.

The electronic device 100 may split locally-obtained audio data or audio data obtained from a server on the internet into audio frames of a plurality of audio channels, and send the audio frames of the plurality of audio channels to the plurality of audio devices through the Wi-Fi direct connections for playing.

In this embodiment of this application, the electronic device 100 may be any one of the following types of devices: a television, a smartphone, a tablet computer, a personal computer, an audio player, and the like. The audio device may be any one of the following types of devices: a speaker, a wireless headset, and the like.

The following describes a schematic diagram of a structure of the electronic device 100 according to an embodiment of this application.

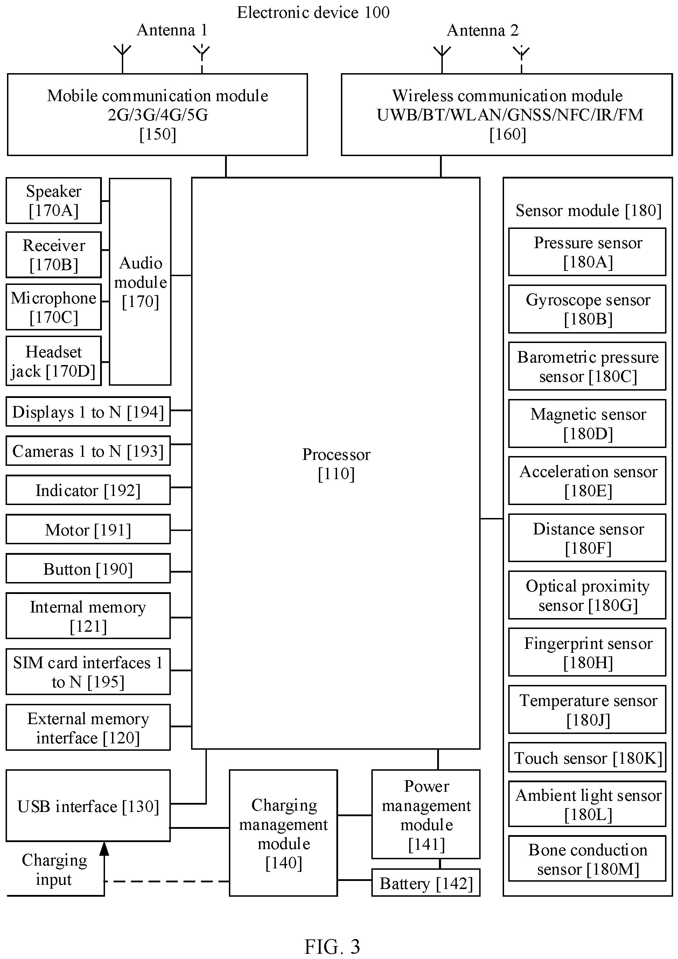

FIG. 3 is a schematic diagram of a structure of the electronic device 100.

The electronic device 100 is used as an example below to describe embodiments in detail. It should be understood that the electronic device 100 shown in FIG. 3 is merely an example, and the electronic device 100 may have more or fewer components than those shown in FIG. 3, or may combine two or more components, or may have different component configurations. Various components shown in the figure may be implemented in hardware including one or more signal processing and/or application-specific integrated circuits, software, or a combination of hardware and software.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call by using a Bluetooth headset. Both the I2S interface and the PCM interface may be used for audio communication.

The UART interface is a universal serial data bus, and is used for asynchronous communication. The bus may be a two-way communication bus. The bus converts to-be-transmitted data between serial communication and parallel communication. In some embodiments, the UART interface is generally configured to connect the processor 110 and the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement an image shooting function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device, for example, an AR device.

It may be understood that an interface connection relationship between the modules that is shown in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device by using the power management module 141.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same component.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent component. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement an image shooting function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of an image shooting scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be configured to connect to an external storage card, for example, a micro SD card, to extend a storage capability of the electronic device 100. The external storage card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to code and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may be used to listen to music or answer a call in a handsfree mode over the speaker 170A.

The receiver 170B, also referred to as an "earpiece", is configured to convert an electrical audio signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation based on the pressure sensor 180A. The electronic device 100 may also calculate a touch position based on a detection signal of the pressure sensor 180A. In some embodiments, touch operations that are performed in a same touch position but have different touch operation intensity may correspond to different operation instructions. For example, when a touch operation whose touch operation intensity is less than a first pressure threshold is performed on an icon of Messages, an instruction for viewing an SMS message is performed. When a touch operation whose touch operation intensity is greater than or equal to the first pressure threshold is performed on the icon of Messages, an instruction for creating a new SMS message is performed.

The gyroscope sensor 180B may be configured to determine a motion posture of the electronic device 100. In some embodiments, an angular velocity of the electronic device 100 around three axes (namely, axes x, y, and z) may be determined by using the gyroscope sensor 180B. The gyroscope sensor 180B may be configured to implement image stabilization during image shooting. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The barometric pressure sensor 180C is configured to measure barometric pressure. In some embodiments, the electronic device 100 calculates an altitude by using the barometric pressure measured by the barometric pressure sensor 180C, to assist in positioning and navigation.

The magnetic sensor 180D includes a Hall effect sensor. The electronic device 100 may detect opening and closing of a flip cover by using the magnetic sensor 180D. In some embodiments, when the electronic device 100 is a clamshell phone, the electronic device 100 may detect opening and closing of a flip cover by using the magnetic sensor 180D. Further, a feature such as automatic unlocking of the flip cover is set based on a detected opening or closing state of a leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure the distance in an infrared manner or a laser manner. In some embodiments, in an image shooting scenario, the electronic device 100 may measure a distance through the distance sensor 180F to implement quick focusing.

The optical proximity sensor 180G may include, for example, a light emitting diode (LED) and an optical detector, for example, a photodiode. The light emitting diode may be an infrared light emitting diode. The electronic device 100 emits infrared light by using the light emitting diode. The electronic device 100 detects infrared reflected light from a nearby object through the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to prevent an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor located near the temperature sensor 180J, to reduce power consumption and implement thermal protection. In some other embodiments, when the temperature is lower than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch panel". The touch sensor 180K may be disposed in the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided by using the display 194. In some other embodiments, the touch sensor 180K may alternatively be disposed on a surface of the electronic device 100, or disposed in a position different from the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 is compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, that is, an embedded SIM card. The eSIM card may be embedded into the electronic device 100, and cannot be separated from the electronic device 100.

The following describes a schematic diagram of a software architecture of the electronic device 100 according to an embodiment of this application.

A software system of the electronic device 100 may use a layered architecture, an event-driven architecture, a microkernel architecture, a micro service architecture, or a cloud architecture. In this embodiment of the present invention, an Android system of a layered architecture is used as an example to illustrate the software structure of the electronic device 100.

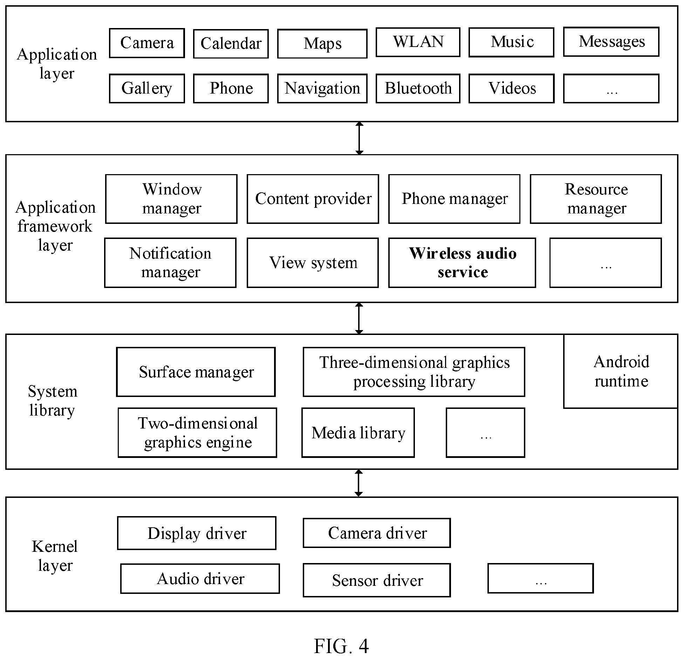

FIG. 4 is a schematic diagram of the software structure of the electronic device 100 according to this embodiment of this application.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 4, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 4, the application framework layer may include a wireless audio service, a window manager, a content provider, a view system, a phone manager, a resource manager, a notification manager, and the like.

The wireless audio service may be configured to receive registration requests actively initiated by a plurality of audio devices. The registration request may be used to request the wireless audio service on the electronic device 100 to initialize audio frame distribution channels of the plurality of audio devices and start a clock synchronization mechanism.

The wireless audio service may further calculate and record a local playback timestamp of each audio frame in the electronic device 100, and carry a number of an audio frame and playback timestamp information in the audio frame distributed to each audio device. The wireless audio service on the audio device may store an audio frame in a buffer queue based on a number of the received audio frame, and play the audio frame based on a playback timestamp.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and a bookmark, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video coding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working process of software and hardware of the electronic device 100 with reference to a photographing scenario.

When the touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. An example in which the touch operation is a touch tap operation, and a control corresponding to the touch tap operation is a control of a camera application icon is used. The camera application invokes an interface of the application framework layer to enable the camera application, then enables the camera driver by invoking the kernel layer, and captures a static image or a video through the camera 193.

The following describes a hardware structure of an audio device according to an embodiment of this application.

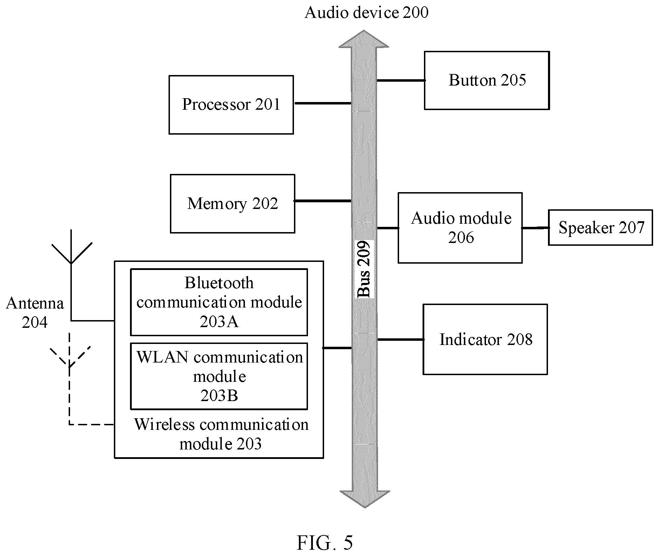

FIG. 5 is a schematic diagram of a hardware structure of an audio device 200 according to an embodiment of this application.

It should be noted that the audio device 200 shown in FIG. 5 is merely an example, and the audio device 200 may have more or fewer components than those shown in FIG. 5, or may combine two or more components, or may have different component configurations. The components shown in FIG. 5 may be implemented in hardware, software, or a combination of hardware and software including one or more signal processing and/or application-specific integrated circuits. For hardware structures of the audio device 210 and the audio device 220 in the speaker networking system 20 shown in FIG. 2, refer to the hardware structure of the audio device 200.

As shown in FIG. 5, the audio device 200 may include a processor 201, a memory 202, a wireless communication processing module 203, a button 205, an antenna 204, an audio module 206, a speaker 207, an indicator 208, and a bus 209. The processor 201, the memory 202, the wireless communication processing module 203, the button 205, the audio module 206, and the indicator 208 may be connected through the bus 209.

The processor 201 may be configured to read and execute computer-readable instructions. During specific implementation, the processor 201 may mainly include a controller, an arithmetic unit, and a register. The controller is mainly responsible for decoding instructions and sending a control signal for an operation corresponding to the instructions. The arithmetic unit is mainly responsible for storing a register operand, an intermediate operation result, and the like that are temporarily stored during instruction execution. During specific implementation, a hardware architecture of the processor 201 may be an application-specific integrated circuit (ASIC) architecture, an MIPS architecture, an ARM architecture, an NP architecture, or the like.

A memory may be further disposed in the processor 201, and is configured to store instructions and data. In some embodiments, the memory in the processor 201 is a cache. The memory may store instructions or data just used or cyclically used by the processor 201. If the processor 201 needs to use the instructions or the data again, the processor may directly invoke the instructions or the data from the memory. This avoids repeated access, reduces waiting time of the processor 201, and improves system efficiency.

The memory 202 is coupled to the processor 201, and is configured to store various software programs and/or a plurality of groups of instructions. The memory 202 may be configured to store computer-executable program code, and the executable program code includes instructions. The processor 201 performs various function applications and data processing of the audio device 200 by running the instructions stored in the memory 202. The memory 202 may include a program storage area and a data storage area. The program storage area may store an operating system, an application required by at least one function (for example, a voice playing function or an image playing function), and the like. The data storage area may store data (for example, an audio frame) created when the audio device 200 is used, and the like. In addition, the memory 202 may include a high-speed random access memory, and may further include a nonvolatile memory, for example, at least one magnetic disk storage device, a flash memory, or a universal flash storage (universal flash storage, UFS).

The wireless communication module 203 may provide a wireless communication solution that includes a wireless local area network (wireless local area network, WLAN) (for example, a wireless fidelity (wireless fidelity, Wi-Fi) network), Bluetooth (Bluetooth, BT), and the like and that is applied to the audio device 200.

In some embodiments, the wireless communication processing module 203 may include a Bluetooth (BT) communication processing module 203A and a WLAN communication processing module 203B. One or more of the Bluetooth (BT) communication processing module 203A and the WLAN communication processing module 203B may listen to a signal transmitted by another device, for example, a probe request or a scanning signal, and may send a response signal, for example, a probe response or a scanning response, so that the another device can discover the audio device 200, and the audio device 200 establishes a wireless communication connection to the another device, and communicates with the another device by using one or more wireless communication technologies in Bluetooth or WLAN. The Bluetooth (BT) communication processing module 203A may provide a Bluetooth communication solution including one or more of classic Bluetooth (BR/EDR) or Bluetooth low energy (Bluetooth low energy, BLE). The WLAN communication processing module 203B may provide a WLAN communication solution including one or more of Wi-Fi Direct, a Wi-Fi LAN, or Wi-Fi SoftAP.

The antenna 204 may be configured to transmit and receive electromagnetic wave signal. Antennas of different communication modules may be multiplexed, or may be independent of each other, to improve antenna utilization.

The button 205 may include one or more of a power button, a volume button, a previous song switch button, a next song switch button, a play/pause button, and the like. The button 205 may be a mechanical button or a touch button. The audio device 200 may receive a button input, and generate a button signal input related to function control of the audio device 200. For example, when the audio device 200 plays the audio data advertised by the electronic device 100, the audio device 200 may receive an input of a user for the play/pause button. In response to the input, the audio device 200 may send a pause instruction to the electronic device 100 through a Wi-Fi direct connection established with the electronic device 100, to trigger the electronic device 100 to pause advertising the audio data to the audio device 200.

In some embodiments, the audio device 200 may further include a battery, a charging management module, and a power management module. The battery may be configured to supply power to the audio device 200. The charging management module is configured to receive a charging input from a charger. The charger may be a wireless charger or a wired charger. In some embodiments of wired charging, the charging management module may receive a charging input of a wired charger through a USB interface. In some embodiments of wireless charging, the charging management module may receive a wireless charging input through a wireless charging coil of the audio device 200. When charging the battery, the charging management module may further supply power to the electronic device by using the power management module. The power management module is configured to connect the battery and the charging management module to the processor 201. The power management module receives an input of the battery and/or an input of the charging management module, and supplies power to the processor 201, the memory 202, the wireless communication module 203, and the like. The power management module may be further configured to monitor parameters such as a battery capacity, a battery cycle count, and a battery health status (electric leakage or impedance). In some other embodiments, the power management module may alternatively be disposed in the processor 201. In some other embodiments, the power management module and the charging management module may alternatively be disposed in a same component.

The audio module 206 may be configured to convert digital audio information into an analog audio signal for output, and is also configured to convert an analog audio input into a digital audio signal. The audio module 206 may be further configured to code and decode an audio signal. In some embodiments, the audio module 206 may be disposed in the processor 201, or some functional modules of the audio module 206 are disposed in the processor 201.

The speaker 207 may be connected to the audio module 206, and the speaker 207 may be configured to convert an audio electrical signal into an audio signal.

Optionally, the audio device 200 may further include a microphone (not shown in FIG. 5), and the microphone may be configured to convert a sound signal into an electrical signal. When the user controls the audio device 200 by using a voice instruction, the user may make a sound by using a human mouth close to the microphone, and input a sound signal to the microphone.

The indicator 208 may be an indicator light, and may be configured to indicate a charging status and a power change, or may be configured to indicate a message, a notification, and the like. In some embodiments, when the electronic device 100 is connected to a plurality of audio devices 200 (for example, an audio device 201 and an audio device 202), the electronic device 100 may configure an audio channel for the audio device 200. When configuring an audio channel for the audio device 201, the electronic device 100 may send a configuration instruction to the audio device 201 through a Wi-Fi direct connection. After receiving the configuration instruction, the audio device 200 may control the indicator 208 to blink, to prompt the user that the electronic device 100 is configuring the audio channel for the audio device 201.

The following describes a hardware structure of a routing device according to an embodiment of this application.

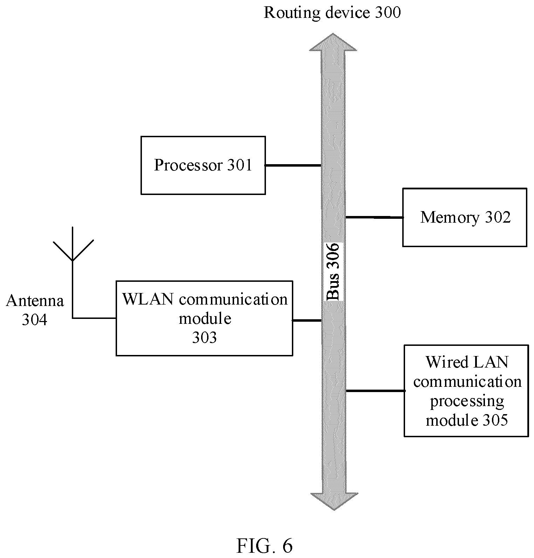

FIG. 6 is a schematic diagram of a hardware structure of a routing device 300 according to an embodiment of this application.

It should be noted that the routing device 300 shown in FIG. 6 is merely an example, and the routing device 300 may have more or fewer components than those shown in FIG. 6, or may combine two or more components, or may have different component configurations. Various components shown in FIG. 6 may be implemented by hardware that includes one or more signal processing and/or application-specific integrated circuits, software, or a combination of hardware and software.

As shown in FIG. 6, the routing device 300 may include a processor 301, a memory 302, a WLAN communication module 303, an antenna 304, a wired local area network (local area network, LAN) communication processing module 305, and a bus 306. The processor 301, the memory 302, the WLAN communication module 303, and the wired LAN communication processing module 305 may be connected through the bus 306.

The processor 301 may be configured to read and execute computer-readable instructions. During specific implementation, the processor 301 may mainly include a controller, an arithmetic unit, and a register. The controller is mainly responsible for decoding instructions and sending a control signal for an operation corresponding to the instructions. The arithmetic unit is mainly responsible for storing a register operand, an intermediate operation result, and the like that are temporarily stored during instruction execution. During specific implementation, a hardware architecture of the processor 301 may be an application-specific integrated circuit (ASIC) architecture, an MIPS architecture, an ARM architecture, an NP architecture, or the like.

A memory may be further disposed in the processor 301, and is configured to store instructions and data. In some embodiments, the memory in the processor 301 is a cache. The memory may store instructions or data just used or cyclically used by the processor 301. If the processor 301 needs to use the instructions or the data again, the processor may directly invoke the instructions or the data from the memory. This avoids repeated access, reduces waiting time of the processor 301, and improves system efficiency.

The memory 302 is coupled to the processor 301, and is configured to store various software programs and/or a plurality of groups of instructions. During specific implementation, the memory 302 may include a high-speed random access memory, and may also include a nonvolatile memory, for example, one or more disk storage devices, a flash device, or another nonvolatile solid-state storage device. The memory 302 may store an operating system, for example, an embedded operating system such as uCOS, VxWorks, or RTLinux. The memory 302 may further store a communication program, and the communication program may be used to communicate with the electronic device 100 or another device. The memory 302 may further store a current configuration, a routing table, and a forwarding table. The routing table may be used to store routing information. The routing table is usually maintained by a routing protocol and a routing table management module, and includes more information (a network address, a next hop, timeout, or the like). The forwarding table may be generated based on the routing table, and is used by a router during actual forwarding. The routing device 300 may send a data packet to a next-hop device based on the forwarding table.

The WLAN communication module 303 may be configured to modulate and demodulate an electromagnetic wave signal, and the WLAN communication module 303 may convert the electromagnetic wave signal based on information and instructions sent by the processor 301, convert the received electromagnetic wave signal into a digital signal, and send the digital signal to the processor 301 for processing.

The antenna 304 may be configured to transmit and receive an electromagnetic wave signal. Antennas of different communication modules may be multiplexed, or may be independent of each other, to improve antenna utilization.

The wired LAN communication processing module may include one or more LAN physical interfaces, and the one or more LAN physical interfaces may be used for another electronic device to establish a connection to the routing device 300 by using a network cable.

The routing device 300 may further include a wired wide area network (WAN) communication processing module. The wired wide area network (WAN) communication processing module may include a WAN physical interface, and the WAN physical interface may be configured to connect the routing device 300 to an internet.

The following describes a schematic flowchart of a stereo networking method according to an embodiment of this application.

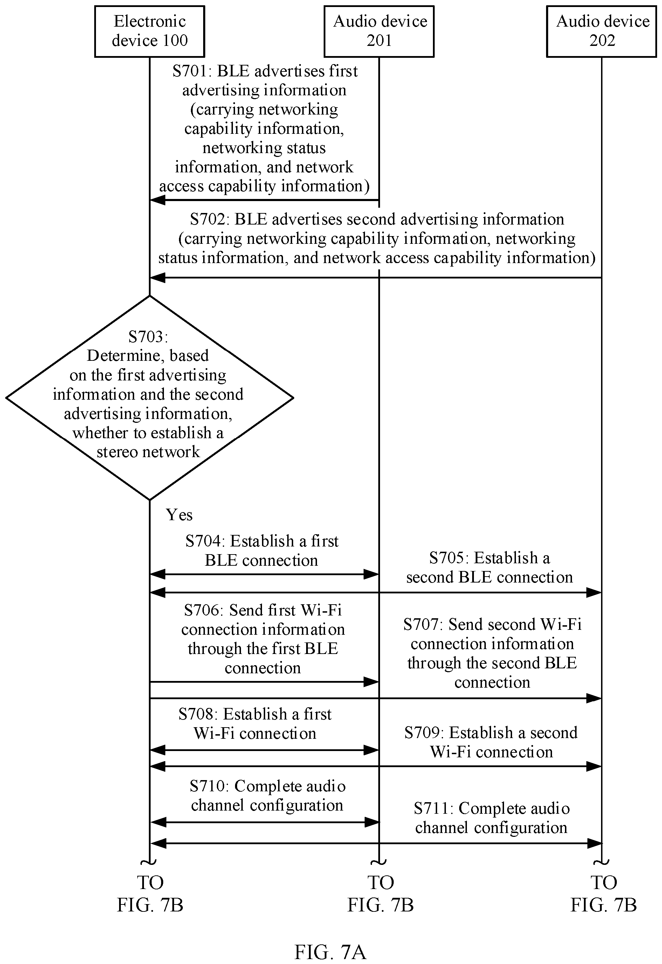

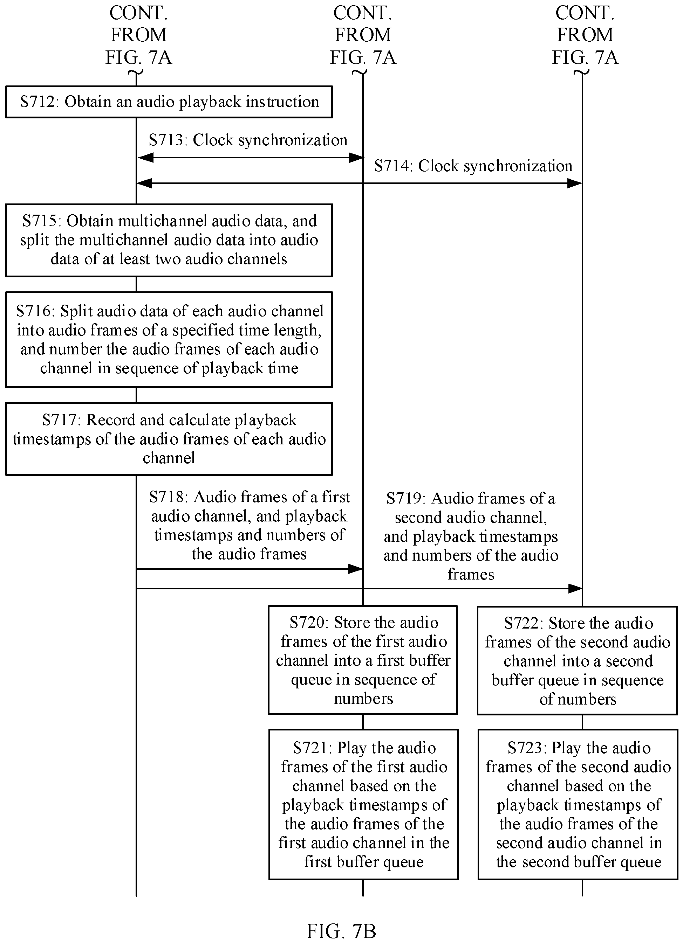

FIG. 7A and FIG. 7B are a schematic flowchart of a stereo networking method according to an embodiment of this application. The stereo networking may be applied to the stereo networking system 20 in the embodiment shown in FIG. 2. The stereo networking system 20 includes at least one audio device. In this embodiment of this application, two audio devices: the audio device 210 and the audio device 220 are used as examples for description. In this embodiment of this application, the audio device 210 may be referred to as a first audio device, and the audio device 220 may be referred to as a second audio device.

As shown in FIG. 7A and FIG. 7B, the stereo networking method may include the following steps.

S701: The electronic device 100 receives first advertising information sent by the audio device 210 through BLE advertising.

The first advertising information may include one or more of a Bluetooth media access control (media access control, MAC) address, a device name, stereo networking capability information, networking status information, network access capability information, and the like of the audio device 210. The stereo networking capability information of the audio device 210 may indicate whether the audio device 210 supports stereo networking. The networking status information of the audio device 210 may indicate whether the audio device 210 has currently completed stereo networking configuration (for example, audio channel configuration).

S702: The electronic device 100 receives second advertising information sent by the audio device 220 through BLE advertising.

The second advertising information may include one or more of a Bluetooth MAC address, a device name, stereo networking capability information, networking status information, network access capability information, and the like of the audio device 220. The stereo networking capability information of the audio device 220 may indicate whether the audio device 220 supports stereo networking. The networking status information of the audio device 220 may indicate whether the audio device 220 has currently completed stereo networking configuration (for example, audio channel configuration).

S703: The electronic device 100 determines, based on the first advertising information and the second advertising information, whether to establish a stereo network. If a stereo network is to be established, step S704 to step S711 are performed.

When the electronic device 100 receives the first advertising information and the second advertising information, it indicates that the electronic device 100 discovers the audio device 210 and the audio device 220.

When the electronic device 100 determines, based on the first advertising information and the second advertising information, that the audio device 210 and the audio device 220 both support stereo networking but neither completes stereo networking configuration, the electronic device 100 may display a stereo networking prompt. The stereo networking prompt may be used to prompt a user whether to configure the audio device 210 and the audio device 220 in the stereo network. After the electronic device 100 receives a user input of confirming to establish the stereo network, the electronic device 100 may establish the stereo network with the audio device 210 and the audio device 220.

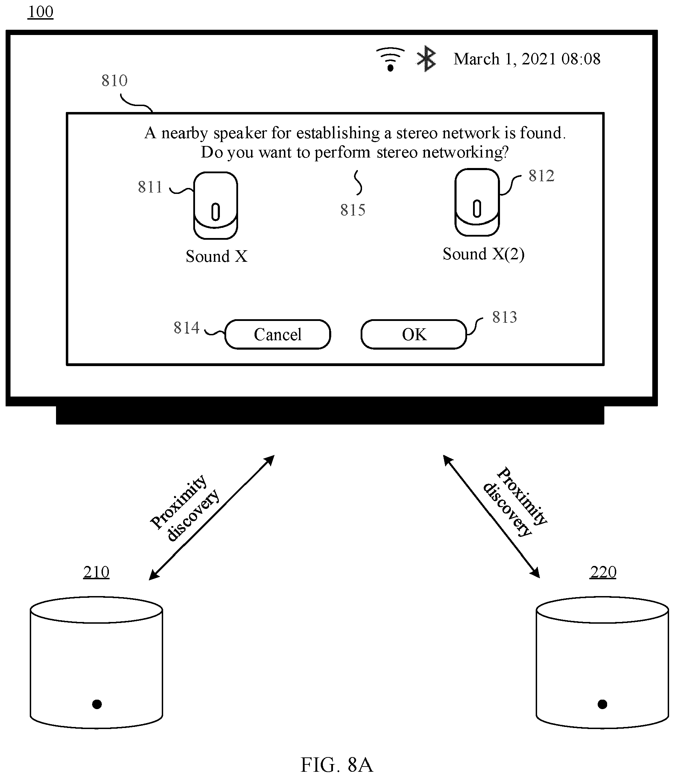

For example, as shown in FIG. 8A, after the electronic device 100 discovers the audio device 210 and the audio device 220, when the electronic device 100 determines that the audio device 210 and the audio device 220 both support stereo networking but neither completes stereo networking configuration, the electronic device 100 may display a device discovery window 810. The device discovery window 810 may display an icon 811 and a name (for example, "Sound X") of the audio device 210, an icon 812 and a name (for example, "Sound X(2)") of the audio device 220, an OK control 813, a Cancel control 814, and prompt information 815. The prompt information 815 may be a text prompt (for example, "A nearby speaker for establishing a stereo network is found. Do you want to perform stereo networking?"). The OK control 813 may be used to trigger the electronic device 100 to perform stereo networking. The Cancel control 814 may be used to trigger the electronic device 100 not to perform stereo networking. The electronic device 100 may receive an input (for example, tapping) of the user for the OK control 813, and in response to the input, the electronic device 100 may perform step S704 to step S712.

In a possible implementation, the electronic device 100 has established a Wi-Fi connection to the audio device 210 in advance. When the electronic device 100 receives, in a BLE or another communication manner, the device name, the stereo networking capability information, the networking status information, and the network access capability information that are sent by the audio device 220, the electronic device 100 may determine, based on the stereo networking capability information and the networking status information of the audio device 220, whether the audio device 220 supports establishing the stereo network and does not complete stereo networking configuration. If the audio device 220 supports establishing the stereo network and does not complete stereo networking configuration, the electronic device 100 may obtain the stereo networking capability information, networking status information, and network access capability information of the audio device 220 through the Wi-Fi connection. If the electronic device 100 may determine that the audio device 220 supports establishing the stereo network and does not complete stereo networking configuration, the electronic device 100 may display the stereo networking prompt. The stereo networking prompt may be used to prompt the user whether to configure the audio device 210 and the audio device 220 in the stereo network. After the electronic device 100 receives the user input of confirming to establish the stereo network, the electronic device 100 may establish the stereo network with the audio device 210 and the audio device 220.

In a possible implementation, the audio device 210 and the audio device 220 may have completed stereo networking configuration with another device in advance. After the electronic device 100 receives the first advertising information advertised by the audio device 210 and the second advertising information of the audio device 220, if the electronic device 100 may determine, based on the first advertising information and the second advertising information, that both the audio device 210 and the audio device 220 support stereo networking and complete stereo networking configuration, the electronic device 100 may perform step S704 to step S711 to re-perform stereo networking configuration for the audio device 210 and the audio device 220.

In a possible implementation, the audio device 210 and the audio device 220 have completed stereo networking configuration with the electronic device 100 in advance. If the electronic device 100 is powered off, the electronic device 100 may disconnect Wi-Fi connections to the audio device 210 and the audio device 220. After the electronic device 100 is powered on again, the electronic device 100 may establish Wi-Fi connections to the audio device 210 and the audio device 220, and play an audio by using an audio channel configured on the audio device 210 and the audio device 220.

S704: The electronic device 100 establishes a first BLE connection to the audio device 210.

S705: The electronic device 100 establishes a second BLE connection to the audio device 220.

S706: The electronic device 100 sends first Wi-Fi connection information to the audio device 210 through the first BLE connection.

S707: The electronic device 100 sends second Wi-Fi connection information to the audio device 220 through the second BLE connection.

The first Wi-Fi connection information may include one or more of a service set identifier (service set identifier, SSID), a network password, a Wi-Fi access frequency band, and the like.

The second Wi-Fi connection information may include one or more of a service set identifier (service set identifier, SSID), a network password, a Wi-Fi access frequency band, and the like.

In a possible implementation, the electronic device 100, the audio device 210, and the audio device 220 may all be connected to a same wireless local area network. For example, the electronic device 100, the audio device 210, and the audio device 220 are all connected to the routing device 300. The audio device 210 may advertise the first advertising information in the wireless local area network by using Wi-Fi, and the audio device 220 may advertise the second advertising information in the wireless local area network by using Wi-Fi. After obtaining respective networking information of the audio device 210 and the audio device 220, the electronic device 100 may determine, based on the first advertising information and the second advertising information, whether to establish the stereo network. If the stereo network is to be established, the electronic device 100 may forward Wi-Fi connection information to the audio device 210 and the audio device 220 by using the routing device 300. After receiving Wi-Fi direct connection information, the audio device 210 and the audio device 220 may disconnect Wi-Fi connections to the routing device 300, and establish Wi-Fi connections to the electronic device 100 based on the Wi-Fi connection information. In this way, the electronic device 100 may establish a Wi-Fi connection to the audio device without using a BLE technology.

S708: The audio device 210 establishes a first Wi-Fi connection to the electronic device 100.

After receiving the first Wi-Fi connection information, the audio device 210 may establish the first Wi-Fi connection to the electronic device 100 based on the first Wi-Fi connection information.

In a possible implementation, if the audio device 210 has established a Wi-Fi connection to another device (for example, a routing device) before receiving the second Wi-Fi connection information, after receiving the first Wi-Fi connection information, the audio device 210 may first disconnect the Wi-Fi connection to the another device, and then establish the first Wi-Fi connection to the electronic device 100 based on the first Wi-Fi connection information.

S709: The electronic device 100 establishes a second Wi-Fi connection to the audio device 220.

After receiving the second Wi-Fi connection information, the audio device 220 may establish the second Wi-Fi connection to the electronic device 100 based on the second Wi-Fi connection information.

In a possible implementation, if the audio device 220 has established a Wi-Fi connection to another device (for example, a routing device) before receiving the second Wi-Fi connection information, after receiving the second Wi-Fi connection information, the audio device 220 may first disconnect the Wi-Fi connection to the another device, and then establish the second Wi-Fi connection to the electronic device 100 based on the second Wi-Fi connection information.

When the electronic device 100 determines, based on the network access capability information of the audio device 210, that both the audio device 210 and the audio device 220 support an access capability of a 2.4 GHz frequency band, the electronic device 100 may establish the first Wi-Fi connection to the audio device 210 on a Wi-Fi 2.4 GHz frequency band, and establish the second Wi-Fi connection to the audio device 220 on the Wi-Fi 2.4 GHz frequency band.

When the electronic device 100 determines, based on the network access capability information of the audio device 210, that both the audio device 210 and the audio device 220 support an access capability of a 5 GHz frequency band, the electronic device 100 may establish the first Wi-Fi connection to the audio device 210 on a Wi-Fi 5 GHz frequency band, and establish the second Wi-Fi connection to the audio device 220 on the Wi-Fi 5 GHz frequency band.

In a possible implementation, when the electronic device 100 determines, based on the network access capability information of the audio device 210, that both the audio device 210 and the audio device 220 support access capabilities of the 2.4 GHz frequency band and the 5 GHz frequency band, the electronic device 100 may preferably establish the first Wi-Fi connection and the second Wi-Fi connection on the Wi-Fi 5 GHz frequency band. In this way, because there is less signal interference on the Wi-Fi 5 GHz frequency band, the Wi-Fi 5 GHz frequency band is preferably selected for Wi-Fi communication, so that a delay of a Wi-Fi connection between the electronic device 100 and the audio device can be reduced.

In a possible implementation, when the electronic device 100 determines, based on the network access capability information of the audio device 210, that one of the audio device 210 and the audio device 220 supports only the access capability of the Wi-Fi 2.4 GHz frequency band, and the other supports only the access capability of the Wi-Fi 5 GHz frequency band, the electronic device 100 may establish, on the Wi-Fi 2.4 GHz frequency band, a Wi-Fi connection to an audio device supporting the access capability of the Wi-Fi 2.4 GHz frequency band, and establish, on the Wi-Fi 5 GHz frequency band, a Wi-Fi connection to an audio device supporting the access capability of the Wi-Fi 5 GHz frequency band.

S710: The electronic device 100 and the audio device 210 complete audio channel configuration.

S711: The electronic device 100 and the audio device 220 complete audio channel configuration.

When the electronic device 100 determines, based on the first advertising information and the second advertising information, that no audio channel is configured for the audio device 210 and the audio device 220, the electronic device 100 may divide different audio channels for the audio device 210 and the audio device 220 based on a stereo group mode. The stereo group mode may include any one of group modes such as a subwoofer group mode, a home theater 5.1, and a home theater 7.1.

For example, the stereo group mode may include dual-channel audio channels: a left audio channel and a right audio channel. The electronic device 100 may configure an audio channel of the audio device 210 as a left audio channel, and configure an audio channel of the audio device 220 as a right audio channel. The electronic device 100 may not sound locally.

For another example, the stereo group mode may include three completely independent audio channels: a left audio channel, a center audio channel, and a right audio channel. The electronic device 100 may configure an audio channel of the audio device 210 as a left audio channel, configure an audio channel of the audio device 220 as a right audio channel, and configure a local audio channel of the electronic device 100 as a center audio channel.

For another example, the audio device that establishes a Wi-Fi direct connection to the electronic device 100 may further include an audio device 230 and an audio device 240. A stereo 5.1 group mode includes a left audio channel, a center audio channel, a right audio channel, a left surround audio channel, a right surround audio channel, and a subwoofer audio channel. The electronic device 100 may configure an audio channel of the audio device 210 as a left audio channel. The electronic device 100 may configure an audio channel of the audio device 220 as a right audio channel. The electronic device 100 may configure an audio channel of the audio device 230 as a left surround audio channel. The electronic device 100 may configure an audio channel of the audio device 240 as a right surround audio channel. The electronic device 100 may configure a local audio channel as a mixed audio channel of a center audio channel and a subwoofer audio channel.

The foregoing examples are merely used to explain this application and shall not be construed as a limitation.

The audio device 210 may receive a user input, determine a first audio channel to which the audio device 210 belongs, and send first audio channel configuration information to the electronic device 100. The first audio channel configuration information indicates that the audio device 210 is configured as the first audio channel. The audio device 220 may receive a user input, determine a second audio channel to which the audio device 220 belongs, and send second audio channel configuration information to the electronic device 100. The second audio channel configuration information indicates that the audio device 220 is configured as the second audio channel.

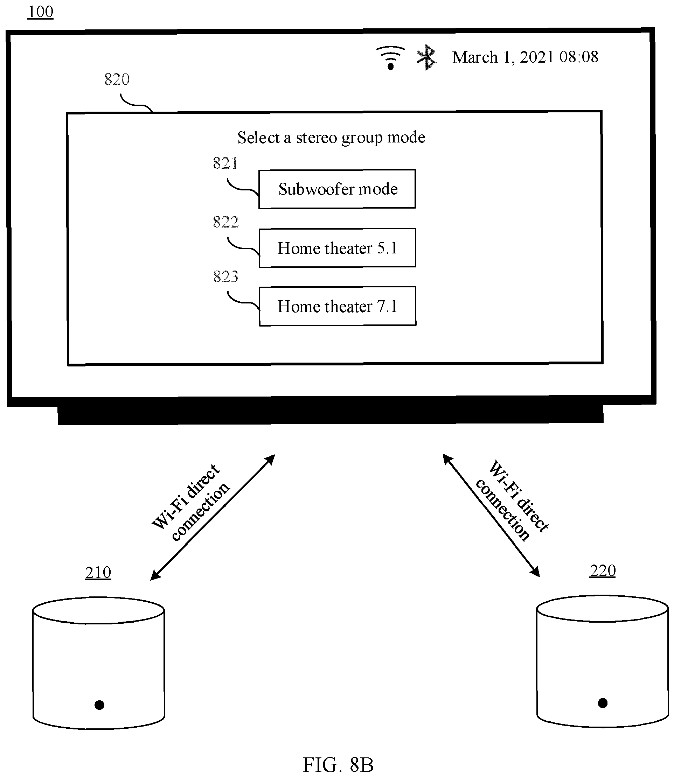

For example, as shown in FIG. 8B, after the electronic device 100 establishes Wi-Fi direct connections to the audio device 210 and the audio device 220, the electronic device 100 may display a stereo group mode selection window 820. The stereo group mode selection window 820 may include a plurality of group mode options. The plurality of group mode options include a subwoofer mode 821, a home theater 5.1 mode 822, a home theater 7.1 mode 823, and the like.

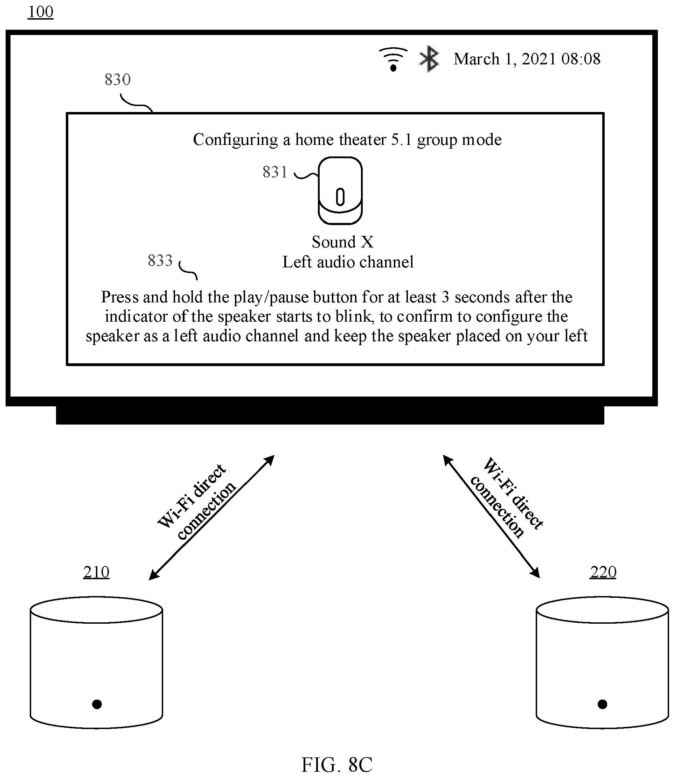

As shown in FIG. 8C, after the electronic device 100 receives a user input for the home theater 5.1 mode 822 (for example, the user sends an instruction to the electronic device 100 by using a remote control to select the home theater 5.1 mode 822), the electronic device 100 may display an audio channel configuration window 830. The audio channel configuration window 830 may display an icon and a name of an audio device for which an audio channel is currently being configured. For example, the electronic device 100 is configuring an audio channel of the audio device 210 as a left audio channel, and the audio channel configuration window 830 displays an icon 831 and a name (for example, "Sound X") corresponding to the audio device 210. The audio channel configuration window 830 further displays a configuration prompt 833, and the configuration prompt 833 may be used to prompt the user to confirm the audio channel configuration on the audio device for which an audio channel is currently being configured. For example, the configuration prompt 833 may be text information "Press and hold the play/pause button for at least 3 seconds after the indicator of the speaker starts to blink, to confirm to configure the speaker as a left audio channel and keep the speaker placed on your left". After starting to display the configuration prompt 833, the electronic device 100 may send an audio channel configuration instruction to the audio device 210. After receiving the audio channel configuration instruction, the audio device 210 may control the indicator to blink. The audio device 210 may receive a press and hold operation (for example, press and hold for at least 3 seconds) of the user on the play/pause button, and in response to the press and hold operation, the audio device 210 may send the first audio channel configuration information to the electronic device 100. After receiving the first audio channel configuration information, the electronic device 100 may configure an audio channel of the audio device 210 as a left audio channel.

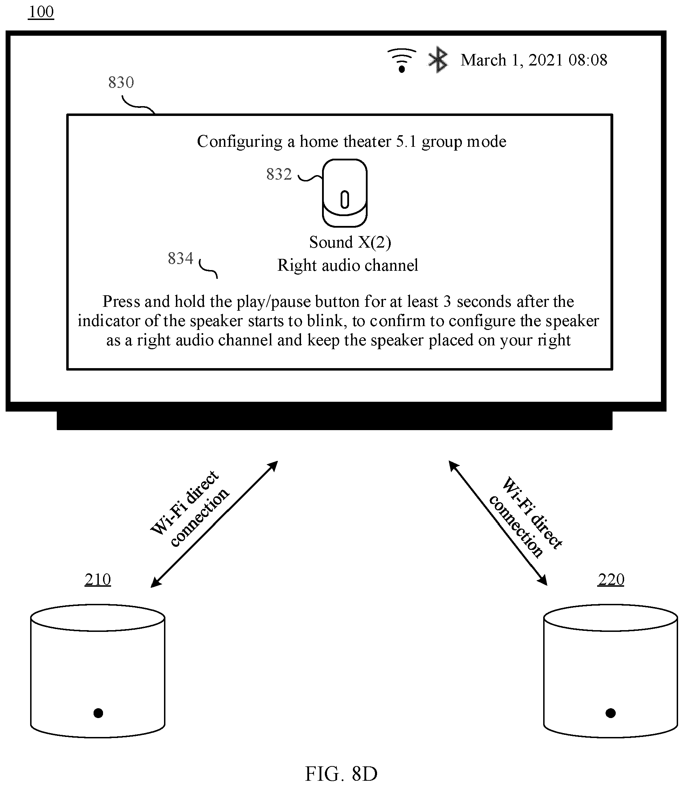

As shown in FIG. 8D, after configuring the audio channel of the audio device 210 as the left audio channel, the electronic device 100 may configure an audio channel of the audio device 220. For example, the electronic device 100 is configuring an audio channel of the audio device 220 as a right audio channel, and the audio channel configuration window 830 displays an icon 832 and a name (for example, "Sound X") corresponding to the audio device 220. The audio channel configuration window 830 further displays a configuration prompt 834, and the configuration prompt 834 may be used to prompt the user to confirm the audio channel configuration on the audio device for which an audio channel is currently being configured. For example, the configuration prompt 834 may be text information "Press and hold the play/pause button for at least 3 seconds after the indicator of the speaker starts to blink, to confirm to configure the speaker as a right audio channel and keep the speaker placed on your right". After starting to display the configuration prompt 834, the electronic device 100 may send an audio channel configuration instruction to the audio device 220. After receiving the audio channel configuration instruction, the audio device 220 may control the indicator to blink. The audio device 220 may receive a press and hold operation (for example, press and hold for at least 3 seconds) of the user on the play/pause button, and in response to the press and hold operation, the audio device 220 may send the second audio channel configuration information to the electronic device 100. After receiving the second audio channel configuration information, the electronic device 100 may configure the audio channel of the audio device 220 as the right audio channel.

In a possible implementation, after receiving the stereo group mode selected by the user, the electronic device 100 may display options corresponding to a plurality of audio devices that establish connections to the electronic device 100. The electronic device 100 receives an operation of selecting, by the user, an option of a device for which an audio channel needs to be configured, and in response to the operation, the electronic device 100 may send, through a Wi-Fi direct connection, a specified instruction to an audio device corresponding to the option, to trigger the audio device corresponding to the option to output a configuration prompt (for example, blink an indicator, or make a voice prompt). The configuration prompt is used to prompt the user that the electronic device 100 is configuring an audio channel for the audio device that outputs the configuration prompt. The electronic device 100 may receive an operation of selecting, by the user, an audio channel for the audio device corresponding to the option. In response to the operation of selecting the audio channel, the electronic device 100 may configure the audio channel selected by the user for the audio device corresponding to the option.

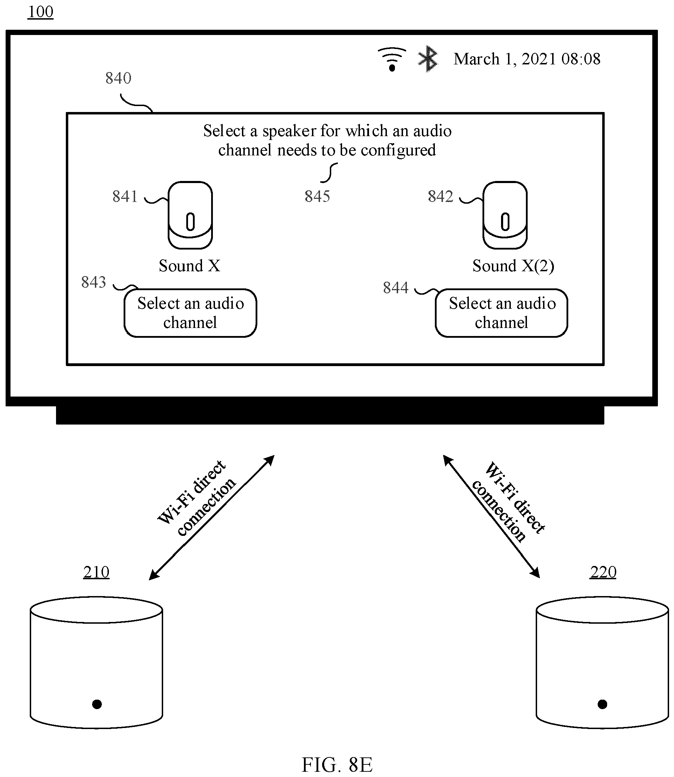

For example, as shown in FIG. 8E, after the electronic device 100 receives a user input for the home theater 5.1 mode 822 (for example, the user sends an instruction to the electronic device 100 by using a remote control to select the home theater 5.1 mode 822), the electronic device 100 may display an audio channel configuration window 840. The audio channel configuration window 840 may include an icon 841 corresponding to the audio device 210, an audio channel selection control 843 corresponding to the audio device 210, an icon 842 corresponding to the audio device 220, an audio channel selection control 844 corresponding to the audio device 220, and prompt information 845. The prompt information 845 may be used to prompt the user to select an audio device for which an audio channel needs to be configured.

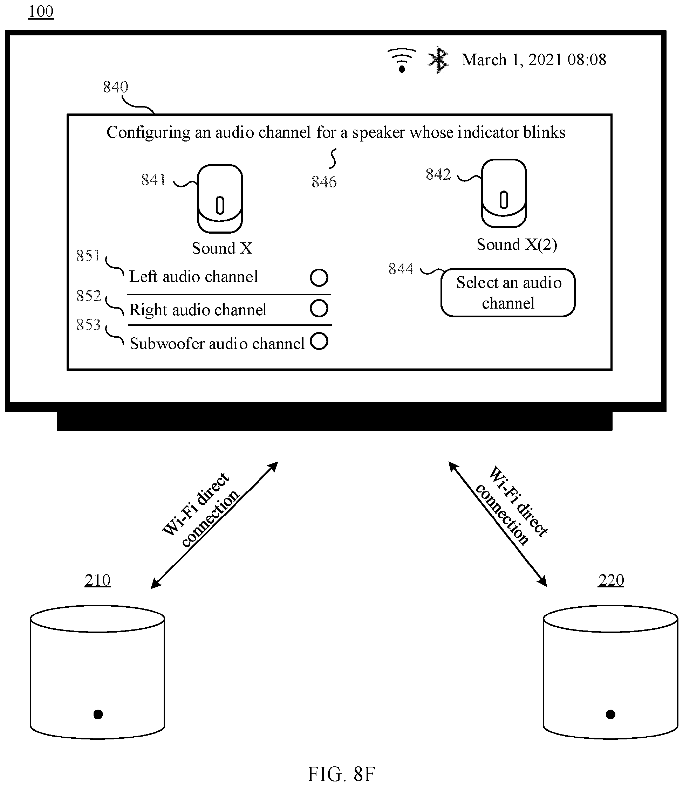

As shown in FIG. 8F, after the electronic device 100 receives an input for the audio channel selection control 843, the electronic device 100 may send a specified instruction to the audio device 210, and display a plurality of audio channel options. The plurality of audio channel options include a left audio channel option 851, a right audio channel option 852, and a subwoofer audio channel option 853. After the audio device 210 receives the specified instruction, the audio device 210 may control the indicator to blink, to prompt the user that the electronic device 100 is currently configuring an audio channel for the audio device 210.

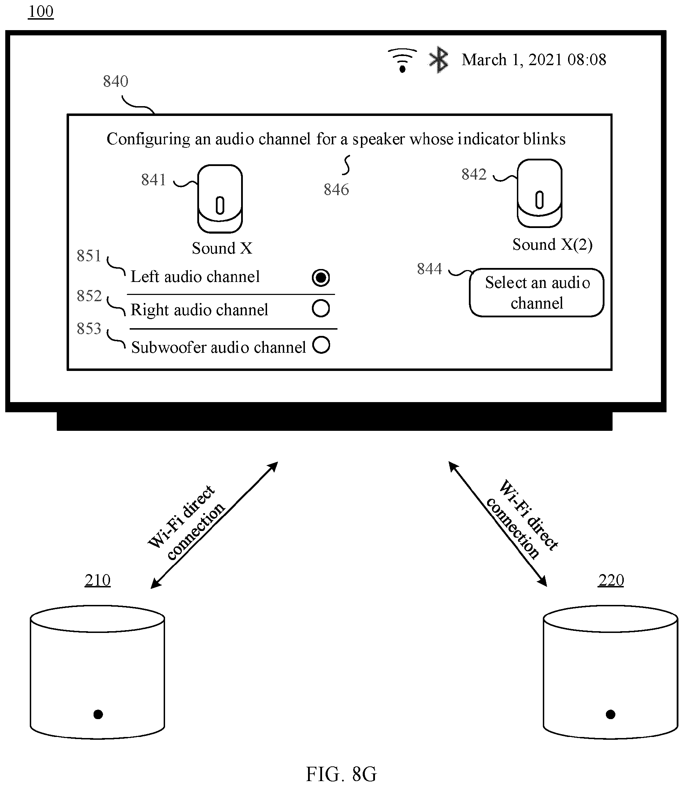

As shown in FIG. 8G, the electronic device 100 may receive a selection input of the user for the left audio channel option 851, and in response to the input, the electronic device 100 may configure a left audio channel for the audio device 210.

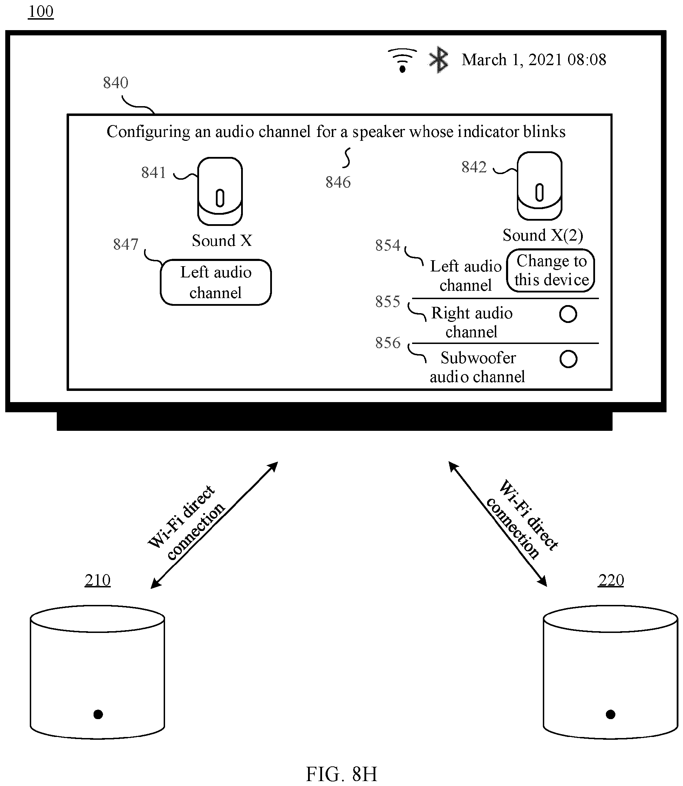

As shown in FIG. 8H, after the electronic device 100 configures the left audio channel for the audio device 210, the electronic device 100 may display an audio channel setting control 847 of the audio device 210. The left audio channel may be displayed on the audio channel setting control 847, and the audio channel setting control 847 may be used to trigger the electronic device 100 to change an audio channel configured for the audio device 210.

After the electronic device 100 receives an input for the audio channel selection control 844, the electronic device 100 may send a specified instruction to the audio device 220, and display a plurality of audio channel options. The plurality of audio channel options include a left audio channel option 854, a right audio channel option 855, and a subwoofer audio channel option 856. The left audio channel is set for the audio device 210. Therefore, a Change control may be displayed on the left audio channel option 854. The Change control may be used to trigger the electronic device 100 to configure the audio device 220 as the left audio channel. After the audio device 220 receives the specified instruction, the audio device 220 may control the indicator to blink, to prompt the user that the electronic device 100 is currently configuring an audio channel for the audio device 220. The electronic device 100 may receive a selection input of the user for the right audio channel option 855, and in response to the input, the electronic device 100 may configure a right audio channel for the audio device 220.

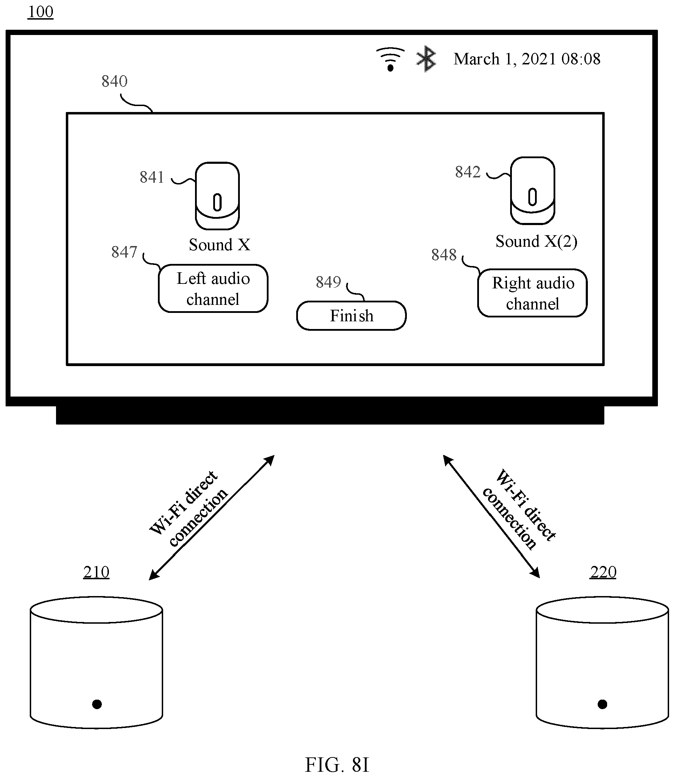

As shown in FIG. 8I, after the electronic device 100 configures the right audio channel for the audio device 220, the electronic device 100 may display an audio channel setting control 848 of the audio device 220. The right audio channel may be displayed on the audio channel setting control 848, and the audio channel setting control 848 may be used to trigger the electronic device 100 to change an audio channel configured for the audio device 220. After the electronic device 100 completes audio channel configuration for all audio devices, the electronic device 100 may display a Finish control 849. The Finish control 849 may be used to trigger the electronic device 100 to close the audio channel configuration window 840.

In a possible implementation, after receiving the stereo group mode selected by the user, the electronic device 100 may display a configuration prompt of the first audio channel. The configuration prompt of the first audio channel may be used to prompt the user that the electronic device 100 is configuring the first audio channel for a corresponding audio device. After the first audio device (for example, the audio device 210) receives a user input of confirming to configure the first audio channel (for example, double-tapping the play/pause button), the first audio device may send the first audio channel configuration information to the electronic device 100. After receiving the first audio channel configuration information, the electronic device 100 may configure the first audio device as the first audio channel. After the second audio device (for example, the audio device 220) receives a user input of confirming to configure the second audio channel (for example, double-tapping the play/pause button), the second audio device may send the second audio channel configuration information to the electronic device 100. After receiving the second audio channel configuration information, the electronic device 100 may configure the second audio device as the second audio channel.

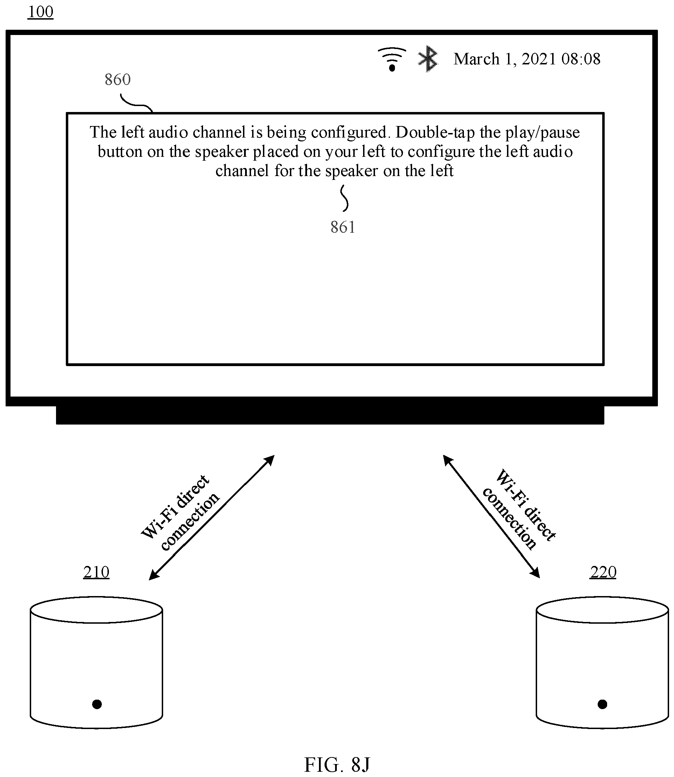

For example, as shown in FIG. 8J, after the electronic device 100 receives a user input for the home theater 5.1 mode 822 (for example, the user sends an instruction to the electronic device 100 by using a remote control to select the home theater 5.1 mode 822), the electronic device 100 may display an audio channel configuration window 860. The audio channel configuration window 860 may include a left audio channel configuration prompt 861. The left audio channel configuration prompt 861 is used to prompt the user to select, from a plurality of audio devices, an audio device for which the left audio channel needs to be configured. For example, the left audio channel configuration prompt 861 may be a text prompt "The left audio channel is being configured. Double-tap the play/pause button on the speaker placed on your left to configure the left audio channel for the speaker on the left". After the audio device 210 receives a user input for the play/pause button, the audio device 210 may send left audio channel configuration information to the electronic device 100.

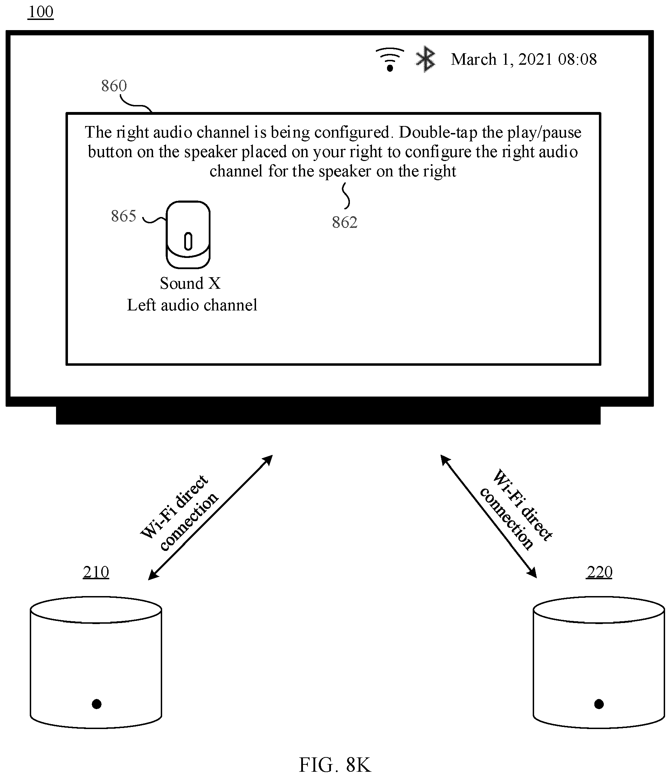

As shown in FIG. 8K, after receiving the left audio channel configuration information, the electronic device 100 may configure the audio device 210 as the left audio channel, and display right audio channel prompt information 862, and the icon and audio channel information (for example, the left audio channel) of the audio device 210 in the audio channel configuration window 860. The right audio channel prompt information 862 may be used to prompt the user to select, from a plurality of audio devices, an audio device for which the right audio channel needs to be configured. For example, the right audio channel configuration prompt 862 may be a text prompt "The right audio channel is being configured. Double-tap the play/pause button on the speaker placed on your right to configure the right audio channel for the speaker on the right".

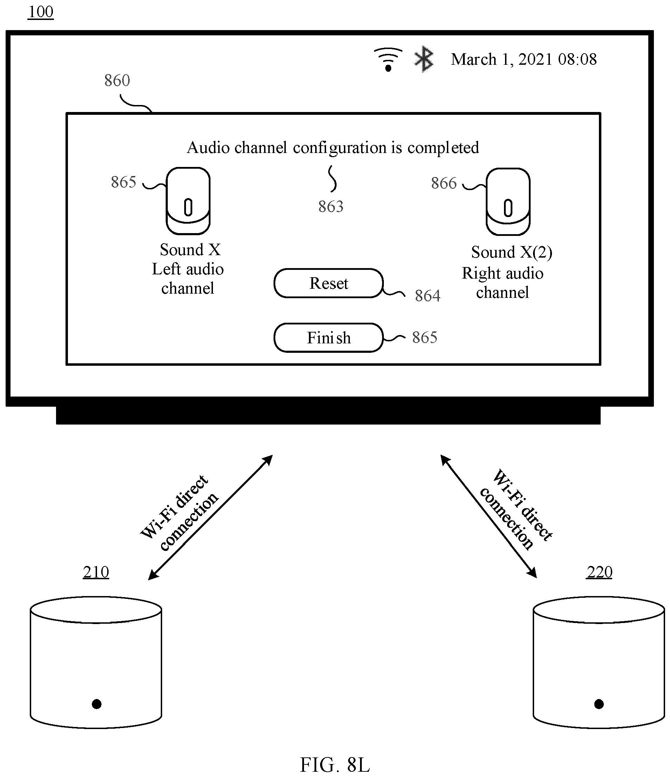

As shown in FIG. 8L, after the audio device 220 receives a user input for the play/pause button, the audio device 220 may send right audio channel configuration information to the electronic device 100. After receiving the right audio channel configuration information, the electronic device 100 may configure the audio device 220 as the right audio channel, and display the icon and audio channel information (for example, the right audio channel) of the audio device 220 in the audio channel configuration window 860. After the electronic device 100 completes audio channel configuration for all audio devices, the electronic device 100 may further display a Finish control 865 and a Reset control 864. The Finish control 865 may be used to trigger the electronic device 100 to close the audio channel configuration window 860. The Reset control 864 may be used to trigger the electronic device 100 to reconfigure the audio channel of the audio device.

S712: The electronic device 100 obtains an audio playback instruction.

The electronic device 100 may receive the audio playback instruction of the user for a specified audio or a specified video.

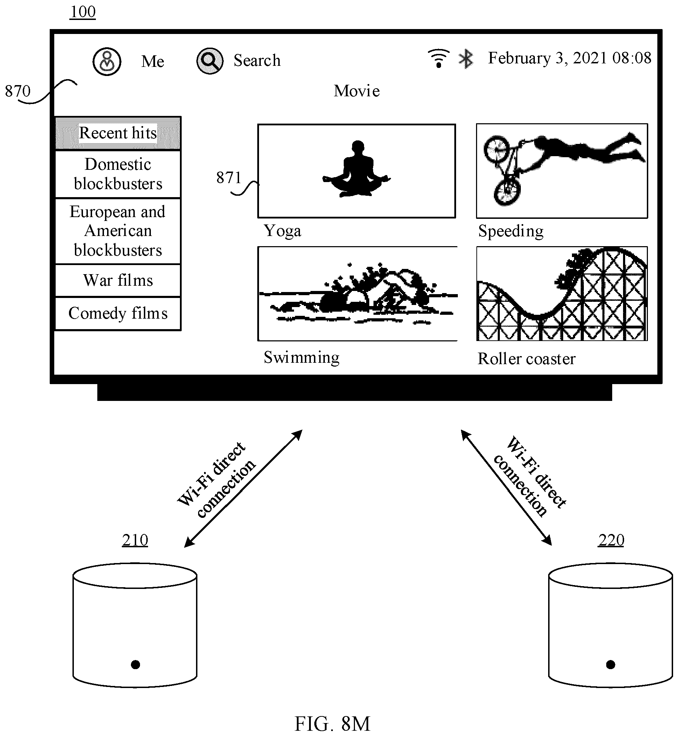

For example, as shown in FIG. 8M, the electronic device 100 may display a video application interface 870. The video application interface 870 may include options corresponding to a plurality of videos. For example, the options corresponding to the plurality of videos include an option 841 of a yoga video, an option of a speeding video, an option of a swimming video, and an option of a roller coaster video. The electronic device 100 may receive a user input for the option 871 of the yoga video (for example, the user sends a selection instruction to the electronic device 100 by using the remote control to select the option 871 of the yoga video). The audio playback instruction may be a selection instruction for the option 871 of the yoga video. The foregoing examples are merely used to explain this application and shall not be construed as a limitation.

S713: The electronic device 100 performs clock synchronization with the audio device 210.

S714: The electronic device 100 performs clock synchronization with the audio device 220.

After the electronic device 100 obtains the audio playback instruction, the electronic device 100 may separately perform clock synchronization with the audio device 210 and the audio device 220 through network measurement and by using the precision clock synchronization protocol standard (IEEE1588) (also referred to as the precise time protocol (precise time protocol, PTP)) of a control system.

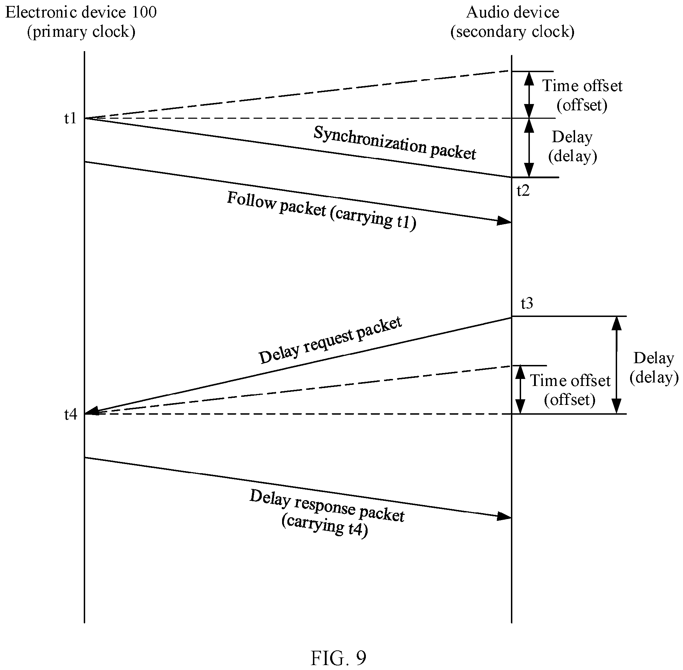

Specifically, as shown in FIG. 9, a process in which the electronic device 100 performs clock synchronization with an audio device (including the audio device 210, the audio device 220, and the like) may be as follows:

1. The electronic device 100 may periodically send a synchronization (sync) packet to the audio device through a Wi-Fi direct connection, and record an accurate sending time t1 at which the synchronization packet leaves the electronic device 100.

2. The electronic device 100 may encapsulate the accurate sending time t1 into a follow packet, and send the follow packet to the audio device through the Wi-Fi direct connection.

3. The audio device may record an accurate arrival time t2 at which the synchronization packet arrives at the audio device 210.

4. The audio device may send a delay request (delay_req) packet to the electronic device 100 through the Wi-Fi direct connection, and record an accurate sending time t3 at which the delay request packet leaves the audio device.

5. The electronic device 100 may receive the delay request packet, and record an accurate arrival time t4 of the delay request packet.

6. The electronic device 100 may send, to the audio device through the Wi-Fi direct connection, a delay response (delay_resp) packet that carries the accurate arrival time t4.

7. The audio device may determine a time offset (offset) between the audio device and the electronic device 100 based on the accurate sending time t1, the accurate arrival time t2, the accurate sending time t3, and the accurate arrival time t4 according to the following formula (1):

$$offset = ((t2 - t1) - (t4 - t3))/2 \text{ Formula (1)}$$

Optionally, the audio device may determine a network delay (delay) between the audio device and the electronic device 100 based on the accurate sending time t1, the accurate arrival time t2, the accurate sending time t3, and the accurate arrival time t4 according to the following formula (2):

$$delay = ((t2 - t1) + (t4 - t3))/2 \text{ Formula (2)}$$

8. After obtaining the time offset (offset), the audio device may correct, based on the time offset (offset), a local clock of the audio device to be synchronized with a clock of the electronic device 100.

S715: The electronic device 100 obtains multichannel audio data, and splits the multichannel audio data into audio data of at least two audio channels.

After the electronic device 100 obtains the audio playback instruction, the electronic device 100 may obtain a specified audio file or a specified video file in response to the audio playback instruction. The electronic device 100 may generate the multichannel audio data by using a stereo algorithm based on audio data in the specified audio file or audio data in the specified video file. A multichannel audio data format may be an audio file format that supports a plurality of audio channels, including a pulse code modulation (pulse code modulation, PCM) format, an OGG format, a WAV format, or the like. The specified audio or the specified video may be downloaded by the electronic device 100 from a server in real time by using the routing device 300, or may be locally stored by the electronic device 100.

In a possible implementation, the electronic device 100 may directly obtain the multichannel audio data from the specified audio file or the specified video file.

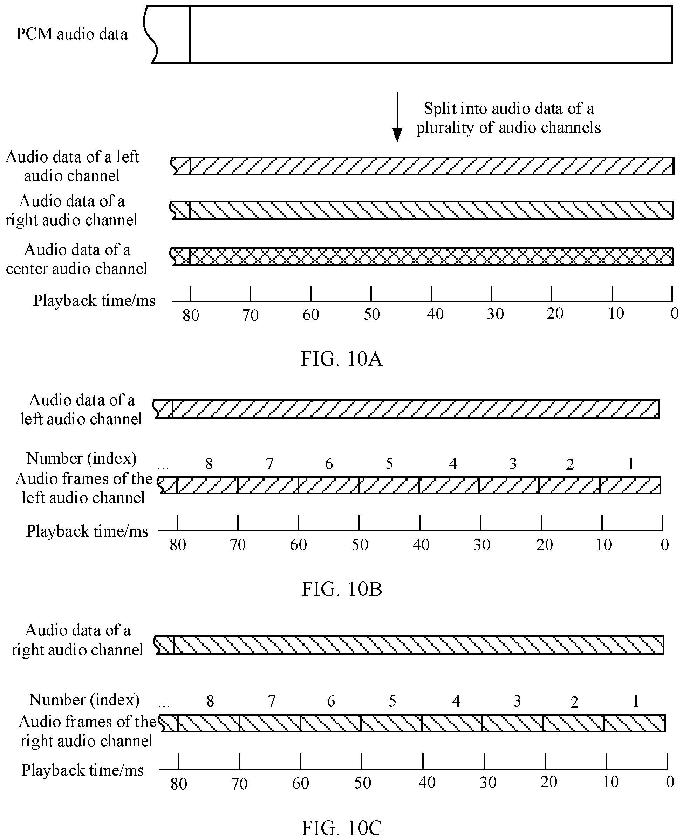

As shown in FIG. 10A, the electronic device 100 may obtain multichannel audio data from a specified audio or a specified video, and split the multichannel audio data into audio data of at least two audio channels. The at least two audio channels may include a first audio channel and a second audio channel. Audio data of the first audio channel may be distributed to the audio device 210 for playing, and audio data of the second audio channel may be distributed to the audio device 220 for playing. Optionally, the multichannel audio data may further include a third audio channel, and audio data of the third audio channel may be played locally on the electronic device 100.

For example, when a stereo 2.1 algorithm is used, the electronic device 100 may split PCM audio data into audio data of two audio channels. The two audio channels include a left audio channel, a center audio channel, and a right audio channel. The electronic device 100 may distribute audio data of the left audio channel to the audio device 210 for playing, distribute audio data of the right audio channel to the audio device 220 for playing, and locally play audio data of the center audio channel.

For another example, when the audio device that establishes the Wi-Fi direct connection to the electronic device 100 may further include the audio device 230 and the audio device 240, the electronic device 100 may further split the PCM audio data into audio data of six audio channels by using a stereo 5.1 algorithm. The six audio channels include a left audio channel, a center audio channel, a right audio channel, a left surround audio channel, a right surround audio channel, and a subwoofer audio channel. The electronic device 100 may distribute audio data of the left audio channel to the audio device 210 for playing. The electronic device 100 may distribute audio data of the right audio channel to the audio device 220 for playing. The electronic device 100 may distribute audio data of the left surround audio channel to the audio device 230 for playing. The electronic device 100 may distribute audio data of the right surround audio channel to the audio device 240 for playing. The electronic device 100 may locally play the center audio channel and the subwoofer audio channel on the electronic device 100.

The foregoing examples are merely used to explain this application and shall not be construed as a limitation.

S716: The electronic device 100 splits audio data of each audio channel into audio frames of a specified time length, and numbers the audio frames of each audio channel in sequence of playback time.

For example, as shown in FIG. 10B, the electronic device 100 may split the audio data of the first audio channel into audio frames of a time length of 10 ms, and number the audio frames of the first audio channel in sequence of playback time. For example, an audio frame, of the first audio channel, whose time progress is from $0^{th}$ ms to $10^{th}$ ms may be numbered "1", an audio frame, of the first audio channel, whose time progress is from $10^{th}$ ms to $20^{th}$ ms channel may be numbered "2", an audio frame, of the first audio channel, whose time progress is from $20^{th}$ ms to $30^{th}$ ms may be numbered "3", an audio frame, of the first audio channel, whose time progress is from $30^{th}$ ms to $40^{th}$ ms may be numbered "4", an audio frame, of the first audio channel, whose time progress is from $40^{th}$ ms to $50^{th}$ ms may be numbered "5", an audio frame, of the first audio channel, whose time progress is from $50^{th}$ ms to $60^{th}$ ms may be numbered "6", an audio frame, of the first audio channel, whose time progress is from $60^{th}$ ms to $70^{th}$ ms may be numbered "7", and an audio frame, of the first audio channel, whose time progress is from $70^{th}$ ms to $80^{th}$ ms may be numbered "8".

As shown in FIG. 10C, the electronic device 100 may split the audio data of the second audio channel into audio frames of a time length of 10 ms, and number the audio frames of the second audio channel in sequence of playback time. For example, an audio frame, of the second audio channel, whose time progress is from $0^{th}$ ms to $10^{th}$ ms may be numbered "1 ", an audio frame, of the second audio channel, whose time progress is from $10^{th}$ ms to $20^{th}$ ms may be numbered "2", an audio frame, of the second audio channel, whose time progress is from $20^{th}$ ms to $30^{th}$ ms may be numbered "3", an audio frame, of the second audio channel, whose time progress is from $30^{th}$ ms to $40^{th}$ ms may be numbered "4", an audio frame, of the second audio channel, whose time progress is from $40^{th}$ ms to $50^{th}$ ms may be numbered "5", an audio frame, of the second audio channel, whose time progress is from $50^{th}$ ms to $60^{th}$ ms may be numbered "6", an audio frame, of the second audio channel, whose time progress is from $60^{th}$ ms to $70^{th}$ ms may be numbered "7", and an audio frame, of the second audio channel, whose time progress is from $70^{th}$ ms to $80^{th}$ ms may be numbered "8".

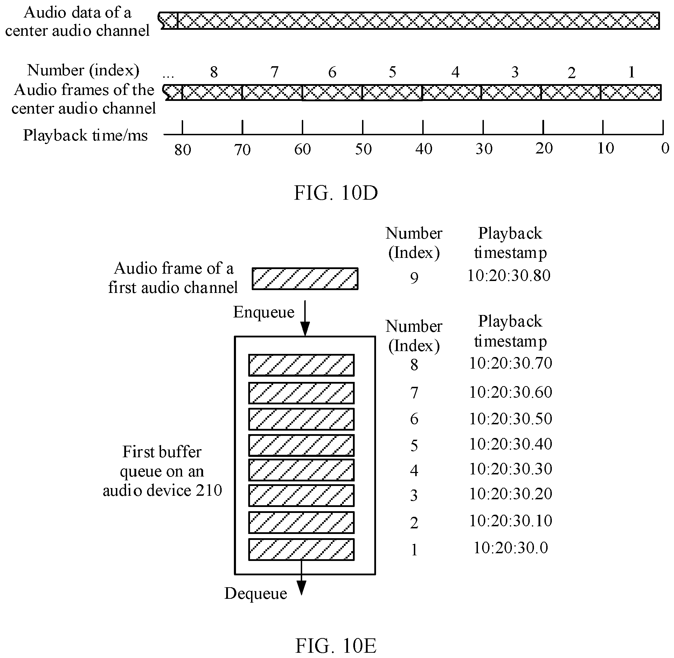

Optionally, as shown in FIG. 10D, the electronic device 100 may split the audio data of the third audio channel into audio frames of a time length of 10 ms, and number the audio frames of the third audio channel in sequence of playback time. For example, an audio frame, of the third audio channel, whose time progress is from $0^{th}$ ms to $10^{th}$ ms may be numbered "1", an audio frame, of the third audio channel, whose time progress is from $10^{th}$ ms to $20^{th}$ ms may be numbered "2", an audio frame, of the third audio channel, whose time progress is from $20^{th}$ ms to $30^{th}$ ms may be numbered "3", an audio frame, of the third audio channel, whose time progress is from $30^{th}$ ms to $40^{th}$ ms may be numbered "4", an audio frame, of the third audio channel, whose time progress is from $40^{th}$ ms to $50^{th}$ ms may be numbered "5", an audio frame, of the third audio channel, whose time progress is from $50^{th}$ ms to $60^{th}$ ms may be numbered "6", an audio frame, of the third audio channel, whose time progress is from $60^{th}$ ms to $70^{th}$ ms may be numbered "7", and an audio frame, of the third audio channel, whose time progress is from $70^{th}$ ms to $80^{th}$ ms may be numbered "8".

S717: The electronic device 100 records and calculates playback timestamps of the audio frames of each audio channel.

Playback timestamps of audio frames that are of different audio channels and with a same number are the same.

The electronic device 100 may determine a playback timestamp of a first audio frame based on a transmission delay of the audio frame, audio playback duration, and an estimated sending moment of the first audio frame of an audio channel after playing starts. Further, the electronic device 100 may determine a playback timestamp of each audio frame of the audio channel based on the playback timestamp of the first audio frame and a time length of the audio frame. The audio playback duration may be a preset empirical value. The transmission delay of the audio frame may be determined according to the formula (2) in the foregoing clock synchronization process. Details are not described herein again. The estimated sending moment of the first audio frame may be a moment after preset duration after the electronic device 100 splits the first audio frame.

For example, the electronic device 100 may obtain the first audio frame through splitting at 10:20:29.820, and the estimated sending moment of the first audio frame may be 10:20:29.920. The audio playback duration may be 40 milliseconds, and the transmission delay of the audio frame may be 40 milliseconds. The time length of the audio frame may be 10 ms. Therefore, the electronic device 100 may determine that the playback timestamp of the first audio frame (numbered 1) may be "10:20:30.0". A playback timestamp of an audio frame numbered "2" may be "10:20:30.10", a playback timestamp of an audio frame numbered "3" may be "10:20:30.20", a playback timestamp of an audio frame numbered "3" may be "10:20:30.20", a playback timestamp of an audio frame numbered "4" may be "10:20:30.30", a playback timestamp of an audio frame numbered "5" may be "10:20:30.40", a playback timestamp of an audio frame numbered "6" may be "10:20:30.50", a playback timestamp of an audio frame numbered "7" may be "10:20:30.60", a playback timestamp of an audio frame numbered "8" may be "10:20:30.70", and so on.

In a possible implementation, when the electronic device 100 establishes the stereo network with the plurality of audio devices, the electronic device 100 may use a maximum transmission delay between the electronic device 100 and the plurality of audio devices as the transmission delay of the audio frame.

For example, the electronic device 100 establishes the stereo network with the audio device 210 and the audio device 220. A transmission delay between the electronic device 100 and the audio device 210 may be 35 milliseconds, and a transmission delay between the electronic device 100 and the audio device 220 may be 40 milliseconds. The electronic device 100 may use 40 milliseconds as the transmission delay of the audio frame.

S718: The electronic device 100 sends the audio frames of the first audio channel, and playback timestamps and numbers of the audio frames of the first audio channel to the audio device 210.

The electronic device 100 may send the audio frames of the first audio channel, and the playback timestamps and the numbers of the audio frames of the first audio channel to the audio device 210 through the first Wi-Fi connection.

S719: The electronic device 100 sends the audio frames of the second audio channel, and playback timestamps and numbers of the audio frames of the second audio channel to the audio device 220.

The electronic device 100 may send the audio frames of the second audio channel, and the playback timestamps and the numbers of the audio frames of the second audio channel to the audio device 220 through the second Wi-Fi connection.

In a possible implementation, the electronic device 100 may alternatively send, to the audio device in another communication manner, audio frames of an audio channel to which the audio frames belong, and playback timestamps and numbers of the audio frames of the audio channel. For example, the electronic device 100 may send the audio frames of the audio channel, and the playback timestamps and the numbers of the audio frames of the audio channel to the audio device in a manner of Bluetooth connection or frequency modulation (frequency modulation, FM) advertising.

S720: The audio device 210 stores the audio frames of the first audio channel into a first buffer queue in sequence of numbers.

S721: The audio device 210 plays the audio frames of the first audio channel based on the playback timestamps of the audio frames of the first audio channel in the first buffer queue.

For example, as shown in FIG. 10E, the audio device 210 may sequentially store audio frames, numbered "1", "2", "3", "4", "5", "6", "7", and "8", of the first audio channel into the first buffer queue. The playback timestamp of the audio frame, numbered "1", of the first audio channel is "10:20:30.0", the playback timestamp of the audio frame, numbered "2", of the first audio channel is "10:20:30.10", the playback timestamp of the audio frame, numbered "3", of the first audio channel is "10:20:30.20", the playback timestamp of the audio frame, numbered "4", of the first audio channel is "10:20:30.30", the playback timestamp of the audio frame, numbered "5", of the first audio channel is "10:20:30.40", the playback timestamp of the audio frame, numbered "6", of the first audio channel is "10:20:30.50", the playback timestamp of the audio frame, numbered "7", of the first audio channel is "10:20:30.60", and the playback timestamp of the audio frame, numbered "8", of the first audio channel is "10:20:30.70". The audio device 210 may extract, from the first buffer queue based on current local time, an audio frame whose playback timestamp is current time for playing.

S722: The audio device 220 stores the audio frames of the second audio channel into a second buffer queue in sequence of numbers.

S723: The audio device 220 plays the audio frames of the second audio channel based on the playback timestamps of the audio frames of the second audio channel in the second buffer queue.

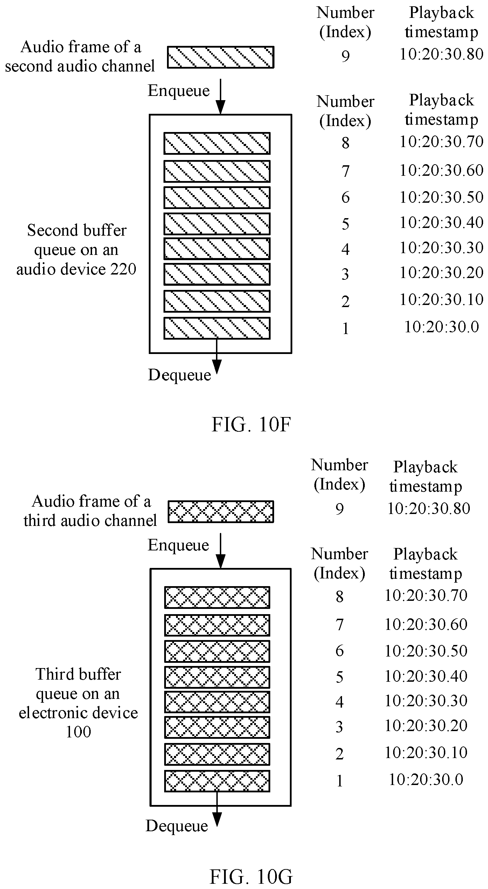

For example, as shown in FIG. 10F, the audio device 220 may sequentially store audio frames, numbered "1", "2", "3", "4", "5", "6", "7", and "8", of the second audio channel into the second buffer queue. The playback timestamp of the audio frame, numbered "1", of the second audio channel is "10:20:30.0", the playback timestamp of the audio frame, numbered "2", of the second audio channel is "10:20:30.10", the playback timestamp of the audio frame, numbered "3 ", of the second audio channel is "10:20:30.20", the playback timestamp of the audio frame, numbered "4", of the second audio channel is "10:20:30.30", the playback timestamp of the audio frame, numbered "5", of the second audio channel is "10:20:30.40", the playback timestamp of the audio frame, numbered "6", of the second audio channel is "10:20:30.50", the playback timestamp of the audio frame, numbered "7", of the second audio channel is "10:20:30.60", and the playback timestamp of the audio frame, numbered "8", of the second audio channel is "10:20:30.70". The audio device 220 may extract, from the second buffer queue based on current local time, an audio frame whose playback timestamp is current time for playing.

Optionally, the multichannel audio data may further include the third audio channel, and the audio data of the third audio channel may be played locally on the electronic device 100. The electronic device 100 stores the audio frames of the third audio channel into a third buffer queue in sequence of numbers. The electronic device 100 plays the audio frames of the third audio channel based on the playback timestamps of the audio frames of the third audio channel in the third buffer queue.

For example, as shown in FIG. 10G, the electronic device 100 may sequentially store audio frames, numbered "1", "2", "3", "4", "5", "6", "7", and "8", of the third audio channel into the third buffer queue. The playback timestamp of the audio frame, numbered "1", of the third audio channel is "10:20:30.0", the playback timestamp of the audio frame, numbered "2", of the third audio channel is "10:20:30.10", the playback timestamp of the audio frame, numbered "3", of the third audio channel is "10:20:30.20", the playback timestamp of the audio frame, numbered "4", of the third audio channel is "10:20:30.30", the playback timestamp of the audio frame, numbered "5", of the third audio channel is "10:20:30.40", the playback timestamp of the audio frame, numbered "6", of the third audio channel is "10:20:30.50", the playback timestamp of the audio frame, numbered "7", of the third audio channel is "10:20:30.60", and the playback timestamp of the audio frame, numbered "8", of the third audio channel is "10:20:30.70". The electronic device 100 may extract, from the third buffer queue based on current local time, an audio frame whose playback timestamp is current time for playing.

In a possible implementation, after both the electronic device 100 and the audio device start to play an audio frame, the electronic device 100 may receive a playback pause instruction, and in response to the playback pause instruction, the electronic device 100 may pause playing the audio frame and/or a video picture, and send the playback pause instruction to each audio device through the Wi-Fi direct connection. Optionally, if the third audio channel is locally configured on the electronic device 100, the electronic device 100 may further clear the audio frames in the local third buffer queue in response to the playback pause instruction. After receiving the playback pause instruction, the audio device may stop playing the audio frames in the buffer queue, and clear the audio frames in the buffer queue. When the electronic device 100 receives the audio playback instruction again, the electronic device 100 and the plurality of audio devices may re-perform step S712 to step S723.

In this way, when the electronic device 100 stops playing the audio or video picture, even if the audio device stops playing the audio frame, it is ensured that the audio or video picture on the electronic device 100 is synchronized with the audio played on the audio device.

In some embodiments, the electronic device 100 may not number audio frames of each audio channel, and the electronic device 100 may directly record and calculate playback timestamps of the audio frames of each audio channel. The electronic device 100 may send the audio frames of the first audio channel and the playback timestamps of the audio frames of the first audio channel to the audio device 210, and send the audio frames of the second audio channel and the playback timestamps of the audio frames of the second audio channel to the audio device 220. The audio device 210 may store the audio frames of the first audio channel into the first buffer queue in a time sequence of playback timestamps. The audio device 220 may store the audio frames of the second audio channel into the second buffer queue in a time sequence of playback timestamps. The electronic device 100 may store the audio frames of the third audio channel into the third buffer queue in a time sequence of playback timestamps.

According to the stereo networking method provided in this embodiment of this application, the electronic device 100 may directly establish Wi-Fi direct connections to a plurality of audio devices. The electronic device 100 may split audio data into audio frames of a plurality of audio channels, and distribute, through the Wi-Fi direct connections, the audio frames to the plurality of audio devices for playing, so that the plurality of audio devices can sound simultaneously. In this way, a forwarding action of a primary speaker can be canceled, and the electronic device 100 directly distributes the audio frames of the plurality of audio channels to the plurality of audio devices for playing, to reduce an audio playback delay. Alternatively, the electronic device and the audio device may jointly sound, to implement a stereo group, and reduce costs for deploying the stereo group.

In some embodiments, the electronic device 100 may alternatively establish a Wi-Fi direct connection to only one audio device. For example, the electronic device 100 establishes a Wi-Fi direct connection to only the audio device 210. After obtaining the multichannel audio data, the electronic device 100 may split the multichannel audio data into audio data of at least two audio channels. The audio data of the at least two audio channels may include the audio data of the first audio channel and the audio data of the third audio channel. The electronic device 100 may split audio data of each audio channel into audio frames of a specified time length, and number the audio frames of each audio channel in sequence of playback time. The electronic device 100 records and calculates playback timestamps of the audio frames of each audio channel.

Then, the electronic device 100 may send the audio frames of the first audio channel, and the playback timestamps and the numbers of the audio frames of the first audio channel to the audio device 210. The audio device 210 may store the audio frames of the first audio channel into the first buffer queue in sequence of numbers. The audio device 210 may play the audio frames of the first audio channel based on the playback timestamps of the audio frames of the first audio channel in the first buffer queue.

The electronic device 100 may store the audio frames of the third audio channel into the third buffer queue in sequence of numbers. The electronic device 100 plays the audio frames of the third audio channel based on the playback timestamps of the audio frames of the third audio channel in the third buffer queue.

In this way, the electronic device 100 may directly establish a Wi-Fi direct connection to a single audio device. The electronic device 100 may split audio data into audio frames of a plurality of channels, send, through the Wi-Fi direct connection, audio frames of one channel to the audio device for playing, and locally play audio frames of another channel, so that the electronic device 100 and the audio device can sound simultaneously. In this way, the electronic device and the audio device may jointly sound, to implement a stereo group, and reduce costs for deploying the stereo group.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

**Claims**

1. A stereo networking system, comprising: an electronic device, a first audio device, and a second audio device, wherein

   the electronic device is configured to receive first advertising information sent by the first audio device and second advertising information sent by the second audio device;
   the electronic device is further configured to: when determining, based on the first advertising information and the second advertising information, that the first audio device and the second audio device both support stereo networking and neither completes audio channel configuration, configure an audio channel of the first audio device as a first audio channel, and configure an audio channel of the second audio device as a second audio channel;
   the electronic device is configured to obtain an audio playback instruction;
   the electronic device is further configured to: obtain first audio data in response to the audio playback instruction, and split the first audio data into audio data of at least two audio channels, wherein the audio data of the at least two audio channels comprises audio data of the first audio channel and audio data of the second audio channel;
   the electronic device is further configured to: send the audio data of the first audio channel to the first audio device, and send the audio data of the second audio channel to the second audio device;
   the first audio device is configured to play the audio data of the first audio channel; and
   the second audio device is configured to play the audio data of the second audio channel.

2. The system according to claim 1, wherein when sending the audio data of the first audio channel to the first audio device, and sending the audio data of the second audio channel to the second audio device, the electronic device is specifically configured to:

   split the audio data of the first audio channel into audio frames of a specified time length, and split the audio data of the second audio channel into audio frames of the specified time length;
   determine playback timestamps of the audio frames of the first audio channel and playback timestamps of the audio frames of the second audio channel; and
   send the audio frames of the first audio channel and the playback timestamps of the audio frames of the first audio channel to the first audio device, and send the audio frames of the second audio channel and the playback timestamps of the audio frames of the second audio channel to the second audio device;
   when playing the audio data of the first audio channel, the first audio device is specifically configured to:

   play the audio frame of the first audio channel at a moment indicated by the playback timestamp of the audio frame of the first audio channel; and
   when playing the audio data of the second audio channel, the second audio device is specifically configured to:
   play the audio frame of the second audio channel at a moment indicated by the playback timestamp of the audio frame of the second audio channel.

3. The system according to claim 1 or 2, wherein the audio data of the at least two audio channels further comprises audio data of a third audio channel; and the electronic device is further configured to play the audio data of the third audio channel.

**4.** The system according to claim 3, wherein the electronic device is further configured to: split the audio data of the third audio channel into audio frames of the specified time length, and determine playback timestamps of the audio frames of the third audio channel; and
when playing the audio data of the third audio channel, the electronic device is specifically configured to: play the audio frame of the third audio channel at a moment indicated by the playback timestamp of the audio frame of the third audio channel.

**5.** The system according to claim 1, wherein the electronic device is further configured to:
before obtaining the audio playback instruction, establish a first wireless fidelity Wi-Fi connection to the first audio device, and establish a second Wi-Fi connection to the second audio device.

**6.** The system according to claim 5, wherein the electronic device is specifically configured to:

receive the first advertising information sent by the first audio device by using Bluetooth low energy BLE, and receive the second advertising information sent by the second audio device by using the BLE;
the electronic device is further configured to:

establish a first BLE connection to the first audio device and establish a second BLE connection to the second audio device based on the first advertising information and the second advertising information; and send first Wi-Fi connection information to the first audio device through the first BLE connection, and send second Wi-Fi connection information to the second audio device through the second BLE connection;
the first audio device is further configured to establish the first Wi-Fi connection to the electronic device based on the first Wi-Fi connection information; and
the second audio device is further configured to establish the second Wi-Fi connection to the electronic device based on the second Wi-Fi connection information.

**7.** The system according to claim 5, wherein the electronic device is specifically configured to:

receive the first advertising information forwarded by the first audio device by using a routing device, and receive the second advertising information forwarded by the second audio device by using the routing device;
the electronic device is further configured to:

forward, based on the first advertising information and the second advertising information, first Wi-Fi connection information to the first audio device by using the routing device, and forward second Wi-Fi connection information to the second audio device by using the routing device;
the first audio device is further configured to establish the first Wi-Fi connection to the electronic device based on the first Wi-Fi connection information; and
the second audio device is further configured to establish the second Wi-Fi connection to the electronic device based on the second Wi-Fi connection information.

**8.** The system according to claim 7, wherein the first audio device is specifically configured to: after receiving the first Wi-Fi connection information, disconnect a Wi-Fi connection to the routing device, and establish the first Wi-Fi connection to the electronic device; and
the second audio device is specifically configured to: after receiving the second Wi-Fi connection information, disconnect a Wi-Fi connection to the routing device, and establish the second Wi-Fi connection to the electronic device.

**9.** The system according to claim 1, wherein when configuring the audio channel of the first audio device as the first audio channel, and configuring the audio channel of the second audio device as the second audio channel, the electronic device is specifically configured to:

send a first configuration instruction to the first audio device through a first Wi-Fi connection, and display a first configuration prompt, a first option corresponding to the first audio channel, and a second option corresponding to the second audio channel, wherein the first configuration prompt is used to prompt a user that an audio channel is currently being configured for the first audio device;
after displaying the first configuration prompt, receive a first input of the user for the first option;
determine the audio channel of the first audio device as the first audio channel in response to the first input;
send a second configuration instruction to the second audio device through a second Wi-Fi connection, and display a second configuration prompt, the first option corresponding to the first audio channel, and the second option corresponding to the second audio channel, wherein the second configuration prompt is used to prompt the user that an audio channel is currently being configured for the second audio device;

after displaying the second configuration prompt, receive a second input of the user for the second option; and

determine the audio channel of the second audio device as the second audio channel in response to the second input;

the first audio device is further configured to blink an indicator of the first audio device after receiving the first configuration instruction; and

the second audio device is further configured to blink an indicator of the second audio device after receiving the second configuration instruction.

10. The system according to claim 1, wherein when configuring the audio channel of the first audio device as the first audio channel, and configuring the audio channel of the second audio device as the second audio channel, the electronic device is specifically configured to:

display a third configuration prompt, wherein the third configuration prompt is used to prompt a user that a corresponding audio device is currently being configured for the first audio channel;

when displaying the third configuration prompt, receive a first instruction sent by the first audio device through a first Wi-Fi connection based on a third input of the user;

determine the audio channel of the first audio device as the first audio channel in response to the first instruction;

after determining the audio channel of the first audio device as the first audio channel, display a fourth configuration prompt, wherein the fourth configuration prompt is used to prompt the user that a corresponding audio device is currently being configured for the second audio channel;

when displaying the fourth configuration prompt, receive a second instruction sent by the second audio device through a second Wi-Fi connection based on a fourth input of the user; and

determine the audio channel of the second audio device as the second audio channel in response to the second instruction.

11. The system according to claim 1, wherein the electronic device is further configured to:

when determining, based on the first advertising information and the second advertising information, that the first audio device and the second audio device both support stereo networking and complete audio channel configuration, receive first audio channel configuration information sent by the first audio device, and receive second audio channel configuration information sent by the second audio device, wherein

the first audio channel configuration information indicates that the audio channel of the first audio device is the first audio channel, and the second audio channel configuration information indicates that the audio channel of the second audio device is the second audio channel.

12. The system according to claim 1, wherein the electronic device is further configured to:

before obtaining multichannel audio data, perform clock synchronization with the first audio device and the second audio device.

13. The system according to claim 2, wherein when determining the playback timestamps of the audio frames of the first audio channel and the playback timestamps of the audio frames of the second audio channel, the electronic device is specifically configured to:

determine a transmission delay of the audio frame, audio playback duration, and an estimated sending moment of a first audio frame of each audio channel after playing starts;

determine a playback timestamp of the first audio frame of each audio channel based on the transmission delay of the audio frame, the audio playback duration, and the estimated sending moment of the first audio frame of each audio channel after the playing starts; and

determine a playback timestamp of each audio frame of each audio channel based on the playback timestamp of the first audio frame of each audio channel and the specified time length of the audio frame.

14. The system according to claim 2, wherein the electronic device is further configured to:

obtain a playback pause instruction after sending the audio frames of the first audio channel and the playback timestamps of the audio frames of the first audio channel to the first audio device and sending the audio frames of the second audio channel and the playback timestamps of the audio frames of the second audio channel to the second audio device; and

in response to the playback pause instruction, pause playing an audio frame and/or a video picture, send a first playback pause instruction to the first audio device, and send a second playback pause instruction to the second audio device;

the first audio device is further configured to: after receiving the first playback pause instruction, pause playing the audio frame of the first audio channel, and delete a buffered audio frame of the first audio channel; and

the second audio device is further configured to: after receiving the second playback pause instruction, pause playing the audio frame of the second audio channel, and delete a buffered audio frame of the second audio channel.

15. The system according to any one of claims 1 to 14, wherein the first advertising information comprises first networking capability information and first networking status information, and the second advertising information comprises second networking capability information and second networking status information, wherein

the first networking capability information indicates whether the first audio device supports stereo networking, the first networking status information indicates whether the first audio device completes audio channel configuration, the second networking capability information indicates whether the second audio device supports stereo networking configuration, and the second networking status information indicates whether the second audio device completes audio channel configuration.

16. The system according to any one of claims 5 to 8, wherein the first Wi-Fi connection information comprises a service set identifier SSID, a Wi-Fi password, and a Wi-Fi access frequency band of the first Wi-Fi connection, and the second Wi-Fi connection information comprises an SSID, a Wi-Fi password, and a Wi-Fi access frequency band of the second Wi-Fi connection.

17. A stereo networking method, applied to an electronic device, wherein the method comprises:

receiving, by the electronic device, first advertising information sent by a first audio device and second advertising information sent by a second audio device;

when the electronic device determines, based on the first advertising information and the second advertising information, that the first audio device and the second audio device both support stereo networking and neither completes audio channel configuration, configuring an audio channel of the first audio device as a first audio channel, and configuring an audio channel of the second audio device as a second audio channel;

obtaining, by the electronic device, an audio playback instruction;

obtaining, by the electronic device, first audio data in response to the audio playback instruction, and splitting the first audio data into audio data of at least two audio channels, wherein the audio data of the at least two audio channels comprises audio data of the first audio channel and audio data of the second audio channel; and

sending, by the electronic device, the audio data of the first audio channel to the first audio device for playing, and sending the audio data of the second audio channel to the second audio device for playing.

18. The method according to claim 17, wherein the sending, by the electronic device, the audio data of the first audio channel to the first audio device for playing, and sending the audio data of the second audio channel to the second audio device for playing specifically comprises:

splitting, by the electronic device, the audio data of the first audio channel into audio frames of a specified time length, and splitting the audio data of the second audio channel into audio frames of the specified time length;

determining, by the electronic device, playback timestamps of the audio frames of the first audio channel and playback timestamps of the audio frames of the second audio channel; and

sending, by the electronic device, the audio frames of the first audio channel and the playback timestamps of the audio frames of the first audio channel to the first audio device, and sending the audio frames of the second audio channel and the playback timestamps of the audio frames of the second audio channel to the second audio device, wherein

the playback timestamp of the audio frame of the first audio channel indicates a moment at which the audio frame of the first audio channel is played on the first audio device, and the playback timestamp of the audio frame of the second audio channel indicates a moment at which the audio frame of the second audio channel is played on the second audio device.

19. The method according to claim 17 or 18, wherein the audio data of the at least two audio channels further comprises audio data of a third audio channel; and the method further comprises:

playing, by the electronic device, the audio data of the third audio channel.

20. The method according to claim 19, wherein the method further comprises:

splitting, by the electronic device, the audio data of the third audio channel into audio frames of the specified time length, and determining playback timestamps of audio frames of the third audio channel; and

the playing, by the electronic device, the audio data of the third audio channel specifically comprises:

playing, by the electronic device, the audio frame of the third audio channel at a moment indicated by the playback timestamp of the audio frame of the third audio channel.

21. The method according to claim 17, wherein before the electronic device obtains the audio playback instruction, the method further comprises: establishing, by the electronic device, a first wireless fidelity Wi-Fi connection to the first audio device, and establishing a second Wi-Fi connection to the second audio device.

22. The method according to claim 21, wherein the receiving, by the electronic device, first advertising information sent by a first audio device and second advertising information sent by a second audio device specifically comprises:

receiving, by the electronic device, the first advertising information sent by the first audio device by using BLE, and receiving the second advertising information sent by the second audio device by using the BLE; and the method further comprises:

establishing, by the electronic device, a first BLE connection to the first audio device and establishing a second BLE connection to the second audio device based on the first advertising information and the second advertising information; and sending, by the electronic device, first Wi-Fi connection information to the first audio device through the first BLE connection, and sending second Wi-Fi connection information to the second audio device through the second BLE connection, wherein the first Wi-Fi connection information indicates the first audio device to establish the first Wi-Fi connection to the electronic device, and the second Wi-Fi connection information indicates the second audio device to establish the second Wi-Fi connection to the electronic device.

23. The method according to claim 21, wherein the receiving, by the electronic device, first advertising information sent by a first audio device and second advertising information sent by a second audio device specifically comprises:

receiving, by the electronic device, the first advertising information forwarded by the first audio device by using a routing device, and receiving the second advertising information forwarded by the second audio device by using the routing device; and forwarding, by the electronic device based on the first advertising information and the second advertising information, first Wi-Fi connection information to the first audio device by using the routing device, and forwarding second Wi-Fi connection information to the second audio device by using the routing device, wherein the first Wi-Fi connection information indicates the first audio device to establish the first Wi-Fi connection to the electronic device, and the second Wi-Fi connection information indicates the second audio device to establish the second Wi-Fi connection to the electronic device.

24. The method according to claim 23, wherein the first Wi-Fi connection information specifically indicates the first audio device to establish the first Wi-Fi connection to the electronic device after disconnecting a Wi-Fi connection to the routing device; and the second Wi-Fi connection information specifically indicates the second audio device to establish the second Wi-Fi connection to the electronic device after disconnecting a Wi-Fi connection to the routing device.

25. The method according to claim 17, wherein the configuring, by the electronic device, an audio channel of the first audio device as a first audio channel, and configuring an audio channel of the second audio device as a second audio channel specifically comprises:

sending, by the electronic device, a first configuration instruction to the first audio device through a first Wi-Fi connection, and displaying a first configuration prompt, a first option corresponding to the first audio channel, and a second option corresponding to the second audio channel, wherein the first configuration prompt is used to prompt a user that an audio channel is currently being configured for the first audio device, and the first configuration instruction instructs the first audio device to blink an indicator of the first audio device; after displaying the first configuration prompt, receiving, by the electronic device, a first input of the user for the first option; determining, by the electronic device, the audio channel of the first audio device as the first audio channel in response to the first input; sending, by the electronic device, a second configuration instruction to the second audio device through a second Wi-Fi connection, and displaying a second configuration prompt, the first option corresponding to the first audio channel, and the second option corresponding to the second audio channel, wherein the second configuration prompt is used to prompt the user that an audio channel is currently being configured for the second audio device, and the second configuration instruction instructs the second audio device to blink an indicator of the second audio device;

after displaying the second configuration prompt, receiving, by the electronic device, a second input of the user for the second option; and

determining, by the electronic device, the audio channel of the second audio device as the second audio channel in response to the second input.

26. The method according to claim 17, wherein the configuring, by the electronic device, an audio channel of the first audio device as a first audio channel, and configuring an audio channel of the second audio device as a second audio channel specifically comprises:

displaying, by the electronic device, a third configuration prompt, wherein the third configuration prompt is used to prompt a user that a corresponding audio device is currently being configured for the first audio channel;

when displaying the third configuration prompt, receiving, by the electronic device, a first instruction sent by the first audio device through a first Wi-Fi connection based on a third input of the user;

determining, by the electronic device, the audio channel of the first audio device as the first audio channel in response to the first instruction;

after determining the audio channel of the first audio device as the first audio channel, displaying, by the electronic device, a fourth configuration prompt, wherein the fourth configuration prompt is used to prompt the user that a corresponding audio device is currently being configured for the second audio channel;

when displaying the fourth configuration prompt, receiving, by the electronic device, a second instruction sent by the second audio device through a second Wi-Fi connection based on a fourth input of the user; and

determining, by the electronic device, the audio channel of the second audio device as the second audio channel in response to the second instruction.

27. The method according to claim 17, wherein the method further comprises:

when determining, based on the first advertising information and the second advertising information, that the first audio device and the second audio device both support stereo networking and complete audio channel configuration, receiving, by the electronic device, first audio channel configuration information sent by the first audio device, and receiving second audio channel configuration information sent by the second audio device, wherein

the first audio channel configuration information indicates that the audio channel of the first audio device is the first audio channel, and the second audio channel configuration information indicates that the audio channel of the second audio device is the second audio channel.

28. The method according to claim 17, wherein the method further comprises:
before obtaining multichannel audio data, performing, by the electronic device, clock synchronization with the first audio device and the second audio device.

29. The method according to claim 18, wherein the determining, by the electronic device, playback timestamps of the audio frames of the first audio channel and playback timestamps of the audio frames of the second audio channel specifically comprises:

determining, by the electronic device, a transmission delay of the audio frame, audio playback duration, and an estimated sending moment of a first audio frame of each audio channel after playing starts;

determining, by the electronic device, a playback timestamp of the first audio frame of each audio channel based on the transmission delay of the audio frame, the audio playback duration, and the estimated sending moment of the first audio frame of each audio channel after the playing starts; and

determining, by the electronic device, a playback timestamp of each audio frame of each audio channel based on the playback timestamp of the first audio frame of each audio channel and the specified time length of the audio frame.

30. The method according to claim 18, wherein after the sending, by the electronic device, the audio frames of the first audio channel and the playback timestamps of the audio frames of the first audio channel to the first audio device, and sending the audio frames of the second audio channel and the playback timestamps of the audio frames of the second audio device to the second audio device, the method further comprises:

obtaining, by the electronic device, a playback pause instruction; and

in response to the playback pause instruction, pausing, by the electronic device, playing an audio frame and/or a video picture, sending a first playback pause instruction to the first audio device, and sending a second playback pause instruction to the second audio device, wherein the first playback pause instruction instructs the first audio device to pause playing the audio frame of the first audio channel and delete a buffered audio frame of the first audio channel, and the second playback pause instruction instructs the second audio device to pause playing the audio frame of the second audio channel and delete a buffered audio frame of the second audio channel.

31. The method according to any one of claims 17 to 30, wherein the first advertising information comprises first networking capability information and first networking status information, and the second advertising information comprises second networking capability information and second networking status information, wherein
the first networking capability information indicates whether the first audio device supports stereo networking, the first networking status information indicates whether the first audio device completes audio channel configuration, the second networking capability information indicates whether the second audio device supports stereo networking configuration, and the second networking status information indicates whether the second audio device completes audio channel configuration.

32. The method according to any one of claims 21 to 24, wherein the first Wi-Fi connection information comprises a service set identifier SSID, a Wi-Fi password, and a Wi-Fi access frequency band of the first Wi-Fi connection, and the second Wi-Fi connection information comprises an SSID, a Wi-Fi password, and a Wi-Fi access frequency band of the second Wi-Fi connection.

33. An electronic device, comprising one or more processors, a Wi-Fi module, and one or more memories, wherein the one or more memories and the Wi-Fi module are coupled to the one or more processors, the one or more memories are configured to store computer program code, the computer program code comprises computer instructions, and when the one or more processors execute the computer instructions, the electronic device is enabled to perform the method according to any one of claims 17 to 32.

34. A computer storage medium, comprising computer instructions, wherein when the computer instructions are run on an electronic device, the electronic device is enabled to perform the method according to any one of claims 17 to 32.

35. A computer program product, wherein when the computer program product runs on an electronic device, the electronic device is enabled to perform the method according to any one of claims 17 to 32.

FIG. 1

Stereo networking system 20

300

100

210

220

...

FIG. 2

Electronic device 100

Antenna 1          Antenna 2

| Mobile communication module 2G/3G/4G/5G [150] | Wireless communication module UWB/BT/WLAN/GNSS/NFC/IR/FM [160] |

Speaker [170A]

Receiver [170B]

Audio module [170]

Microphone [170C]

Headset jack [170D]

Displays 1 to N [194]

Cameras 1 to N [193]

Indicator [192]

Motor [191]

Button [190]

Internal memory [121]

SIM card interfaces 1 to N [195]

External memory interface [120]

USB interface [130]

Charging input

Charging management module [140]

Power management module [141]

Battery [142]

Processor [110]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

FIG. 3

| Application layer | Camera | Calendar | Maps | WLAN | Music | Messages |
| | Gallery | Phone | Navigation | Bluetooth | Videos | ... |

| Application framework layer | Window manager | Content provider | Phone manager | Resource manager |
| | Notification manager | View system | **Wireless audio service** | ... |

| System library | Surface manager | Three-dimensional graphics processing library | Android runtime |
| | Two-dimensional graphics engine | Media library | ... | |

| Kernel layer | Display driver | Camera driver | |
| | Audio driver | Sensor driver | ... |

FIG. 4

Audio device 200

Processor 201

Button 205

Memory 202

Audio module 206

Speaker 207

Antenna 204

Bluetooth communication module 203A

WLAN communication module 203B

Wireless communication module 203

Indicator 208

Bus 209

FIG. 5

Routing device 300

Processor 301

Memory 302

Bus 306

Antenna
304

WLAN communication
module
303

Wired LAN
communication
processing
module 305

FIG. 6

FIG. 7A

CONT.
FROM
FIG. 7A

CONT.
FROM
FIG. 7A

CONT.
FROM
FIG. 7A

S712: Obtain an audio playback instruction

S713: Clock synchronization

S714: Clock synchronization

S715: Obtain multichannel audio data, and split the multichannel audio data into audio data of at least two audio channels

S716: Split audio data of each audio channel into audio frames of a specified time length, and number the audio frames of each audio channel in sequence of playback time

S717: Record and calculate playback timestamps of the audio frames of each audio channel

S718: Audio frames of a first audio channel, and playback timestamps and numbers of the audio frames

S719: Audio frames of a second audio channel, and playback timestamps and numbers of the audio frames

S720: Store the audio frames of the first audio channel into a first buffer queue in sequence of numbers

S722: Store the audio frames of the second audio channel into a second buffer queue in sequence of numbers

S721: Play the audio frames of the first audio channel based on the playback timestamps of the audio frames of the first audio channel in the first buffer queue

S723: Play the audio frames of the second audio channel based on the playback timestamps of the audio frames of the second audio channel in the second buffer queue

FIG. 7B

100

A nearby speaker for establishing a stereo network is found.
Do you want to perform stereo networking?

Sound X

Sound X(2)

Cancel

OK

FIG. 8A

FIG. 8B

100

830

Configuring a home theater 5.1 group mode

831

0

Sound X
Left audio channel

833

Press and hold the play/pause button for at least 3 seconds after the indicator of the speaker starts to blink, to confirm to configure the speaker as a left audio channel and keep the speaker placed on your left

March 1, 2021 08:08

Wi-Fi direct connection

Wi-Fi direct connection

210

220

FIG. 8C

100

Configuring a home theater 5.1 group mode

830

832

Sound X(2)
Right audio channel

834

Press and hold the play/pause button for at least 3 seconds after the indicator of the speaker starts to blink, to confirm to configure the speaker as a right audio channel and keep the speaker placed on your right

March 1, 2021 08:08

Wi-Fi direct connection

Wi-Fi direct connection

210

220

FIG. 8D

FIG. 8E

100

Configuring an audio channel for a speaker whose indicator blinks

840

841 846 842

Sound X Sound X(2)

851 Left audio channel ○ 844 Select an audio channel

852 Right audio channel ○

853 Subwoofer audio channel ○

March 1, 2021 08:08

Wi-Fi direct connection

Wi-Fi direct connection

210 220

FIG. 8F

100

Configuring an audio channel for a speaker whose indicator blinks

840

841　　Sound X

846

842　　Sound X(2)

851　Left audio channel　◉

852　Right audio channel　○

853　Subwoofer audio channel　○

844　Select an audio channel

⌂ March 1, 2021 08:08

Wi-Fi direct connection

Wi-Fi direct connection

210

220

FIG. 8G

100

840

Configuring an audio channel for a speaker whose indicator blinks

841

846

842

Sound X

Sound X(2)

847

854

Left audio
channel

Left audio
channel

Change to
this device

855

Right audio
channel

○

856

Subwoofer
audio channel

○

210

Wi-Fi direct
connection

Wi-Fi direct
connection

220

FIG. 8H

FIG. 8I

100

860

The left audio channel is being configured. Double-tap the play/pause button on the speaker placed on your left to configure the left audio channel for the speaker on the left

861

March 1, 2021 08:08

Wi-Fi direct connection

Wi-Fi direct connection

210

220

FIG. 8J

100

860

The right audio channel is being configured. Double-tap the play/pause button on the speaker placed on your right to configure the right audio channel for the speaker on the right

862

865

Sound X
Left audio channel

Wi-Fi direct connection

Wi-Fi direct connection

210

220

FIG. 8K

FIG. 8L

FIG. 8M

FIG. 9

PCM audio data

Split into audio data of a
plurality of audio channels

Audio data of a left
audio channel

Audio data of a
right audio channel

Audio data of a
center audio channel

Playback time/ms

| 80 | 70 | 60 | 50 | 40 | 30 | 20 | 10 | 0 |

FIG. 10A

Audio data of a
left audio channel

Number (index)    ...  8    7    6    5    4    3    2    1
Audio frames of the
left audio channel

Playback time/ms

| 80 | 70 | 60 | 50 | 40 | 30 | 20 | 10 | 0 |

FIG. 10B

Audio data of a
right audio channel

Number (index)    ...  8    7    6    5    4    3    2    1
Audio frames of the
right audio channel

Playback time/ms

| 80 | 70 | 60 | 50 | 40 | 30 | 20 | 10 | 0 |

FIG. 10C

Audio data of a
center audio channel

Number (index)     ...   8    7    6    5    4    3    2    1
Audio frames of the
center audio channel

Playback time/ms

80    70    60    50    40    30    20    10    0

FIG. 10D

Audio frame of a
first audio channel

Enqueue

First buffer
queue on an
audio device 210

Dequeue

| Number (Index) | Playback timestamp |
| --- | --- |
| 9 | 10:20:30.80 |

| Number (Index) | Playback timestamp |
| --- | --- |
| 8 | 10:20:30.70 |
| 7 | 10:20:30.60 |
| 6 | 10:20:30.50 |
| 5 | 10:20:30.40 |
| 4 | 10:20:30.30 |
| 3 | 10:20:30.20 |
| 2 | 10:20:30.10 |
| 1 | 10:20:30.0 |

FIG. 10E

Audio frame of a
second audio channel

Enqueue

Second buffer
queue on an
audio device 220

Dequeue

| Number (Index) | Playback timestamp |
| --- | --- |
| 9 | 10:20:30.80 |

| Number (Index) | Playback timestamp |
| --- | --- |
| 8 | 10:20:30.70 |
| 7 | 10:20:30.60 |
| 6 | 10:20:30.50 |
| 5 | 10:20:30.40 |
| 4 | 10:20:30.30 |
| 3 | 10:20:30.20 |
| 2 | 10:20:30.10 |
| 1 | 10:20:30.0 |

FIG. 10F

Audio frame of a
third audio channel

Enqueue

Third buffer
queue on an
electronic device
100

Dequeue

| Number (Index) | Playback timestamp |
| --- | --- |
| 9 | 10:20:30.80 |

| Number (Index) | Playback timestamp |
| --- | --- |
| 8 | 10:20:30.70 |
| 7 | 10:20:30.60 |
| 6 | 10:20:30.50 |
| 5 | 10:20:30.40 |
| 4 | 10:20:30.30 |
| 3 | 10:20:30.20 |
| 2 | 10:20:30.10 |
| 1 | 10:20:30.0 |

FIG. 10G

## INTERNATIONAL SEARCH REPORT

| International application No. |
| --- |
| **PCT/CN2022/081761** |

**A. CLASSIFICATION OF SUBJECT MATTER**

H04W 16/18(2009.01)i; H04W 84/18(2009.01)i; H04W 4/80(2018.01)i; H04S 3/00(2006.01)i; H04S 1/00(2006.01)i; G06N 3/08(2006.01)i; G06N 3/04(2006.01)i

According to International Patent Classification (IPC) or to both national classification and IPC

**B. FIELDS SEARCHED**

Minimum documentation searched (classification system followed by classification symbols)

H04W; H04S; G06N

Documentation searched other than minimum documentation to the extent that such documents are included in the fields searched

Electronic data base consulted during the international search (name of data base and, where practicable, search terms used)

CNABS; CNKI; CNTXT; VEN; USTXT; WOTXT; EPTXT; 3GPP; IEEE; IETF: 立体声, 组网, 广播, 蓝牙, 无线局域网, 声道, 同步, 时长, Stereo, network, broadcast, bluetooth, WLAN, wifi, channel, Synch+, time

**C. DOCUMENTS CONSIDERED TO BE RELEVANT**

| Category* | Citation of document, with indication, where appropriate, of the relevant passages | Relevant to claim No. |
| --- | --- | --- |
| X | CN 112312298 A (BEIJING XIAOMI SONGGUO ELECTRONICS CO., LTD.) 02 February 2021 (2021-02-02) description, paragraphs [0077]-[0193] | 1-35 |
| A | CN 203930823 U (LI XINYA) 05 November 2014 (2014-11-05) entire document | 1-35 |
| A | CN 105992040 A (SHENZHEN MY-POWER TECHNOLOGY CO. LIMITED) 05 October 2016 (2016-10-05) entire document | 1-35 |
| A | CN 111866824 A (QINGDAO HISENCE MOBILE COMMUNICATIONS TECHNOLOGY CO., LTD.) 30 October 2020 (2020-10-30) entire document | 1-35 |
| A | CN 105635798 A (FUZHOU ROCKCHIP ELECTRONICS CO., LTD.) 01 June 2016 (2016-06-01) entire document | 1-35 |
| A | CN 103841498 A (YULONG COMPUTER TELECOMMUNICATION SCIENTIFIC (SHENZHEN) CO., LTD.) 04 June 2014 (2014-06-04) entire document | 1-35 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **18 April 2022** | **26 May 2022** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/081761**

| Patent document cited in search report | | | Publication date (day/month/year) | Patent family member(s) | | | Publication date (day/month/year) |
|---|---|---|---|---|---|---|---|
| CN | 112312298 | A | 02 February 2021 | None | | | |
| CN | 203930823 | U | 05 November 2014 | None | | | |
| CN | 105992040 | A | 05 October 2016 | None | | | |
| CN | 111866824 | A | 30 October 2020 | None | | | |
| CN | 105635798 | A | 01 June 2016 | CN | 105635798 | B | 31 May 2019 |
| CN | 103841498 | A | 04 June 2014 | None | | | |

Form PCT/ISA/210 (patent family annex) (January 2015)

**EP 4 287 681 A1**

## REFERENCES CITED IN THE DESCRIPTION

### Patent documents cited in the description

- CN 202110303191